(19) **Europäisches Patentamt / European Patent Office / Office européen des brevets**

(11) **EP 3 412 786 B1**

(12) **EUROPEAN PATENT SPECIFICATION**

(45) Date of publication and mention of the grant of the patent:
**25.08.2021 Bulletin 2021/34**

(21) Application number: **17759588.1**

(22) Date of filing: **08.02.2017**

(51) Int Cl.:
| | |
|---|---|
| *C23C 2/06* (2006.01) | *C21D 9/46* (2006.01) |
| *C22C 38/60* (2006.01) | *C21D 8/02* (2006.01) |
| *C22C 38/02* (2006.01) | *C22C 38/04* (2006.01) |
| *C21D 8/04* (2006.01) | *C22C 38/06* (2006.01) |
| *C23C 2/02* (2006.01) | *C22C 38/38* (2006.01) |
| *C21D 1/19* (2006.01) | *C21D 1/18* (2006.01) |
| *C22C 38/08* (2006.01) | *C22C 38/12* (2006.01) |
| *C22C 38/14* (2006.01) | *C22C 38/16* (2006.01) |
| *C22C 38/28* (2006.01) | *C22C 38/32* (2006.01) |
| *C22C 38/34* (2006.01) | *C21D 1/78* (2006.01) |
| *C21D 6/00* (2006.01) | |

(86) International application number:
**PCT/JP2017/004594**

(87) International publication number:
**WO 2017/150117 (08.09.2017 Gazette 2017/36)**

(54) **HIGH STRENGTH STEEL SHEET AND MANUFACTURING METHOD THEREFOR**

HOCHFESTE STAHLPLATTE UND HERSTELLUNGSVERFAHREN DAFÜR

TÔLE EN ACIER À HAUTE RÉSISTANCE ET SON PROCÉDÉ DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.02.2016 JP 2016038304**
**20.09.2016 JP 2016182966**

(43) Date of publication of application:
**12.12.2018 Bulletin 2018/50**

(73) Proprietor: **Kabushiki Kaisha Kobe Seiko Sho (Kobe Steel, Ltd.)**
**Kobe-shi, Hyogo 651-8585 (JP)**

(72) Inventors:
• **IKEDA, Muneaki**
**Hyogo 675-0137 (JP)**
• **KASUYA, Koji**
**Tokyo 141-8688 (JP)**
• **MURATA, Tadao**
**Hyogo 675-0137 (JP)**
• **SAITO, Kenji**
**Hyogo 675-0137 (JP)**
• **MURAKAMI, Toshio**
**Hyogo 651-2271 (JP)**
• **FUTAMURA, Yuichi**
**Aichi 451-0045 (JP)**

(74) Representative: **Müller-Boré & Partner Patentanwälte PartG mbB**
**Friedenheimer Brücke 21**
**80639 München (DE)**

(56) References cited:
| | |
|---|---|
| EP-A1- 2 530 180 | EP-A1- 2 873 746 |
| EP-A1- 3 405 340 | WO-A1-2013/018741 |
| WO-A1-2016/080534 | JP-A- 2013 040 383 |

• WANG CHAO et al.: "The Effect of Intercritical Annealing on the Microstructure and Mechanical Properties in a High Strength TRIP Steel with C-Partitioning", Steel Research International, vol. 85, no. 3, 2014, pages 388-394, XP055601663,

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 412 786 B1

## Description

## Technical Field

The present invention relates to a high strength steel sheet and a manufacturing method therefor. In further detail, the present invention relates to a high strength steel sheet being excellent in formability at room temperature and having a tensile strength of 980 MPa or more in which a molding load for forming at a hot temperature of 100 to 350°C is outstandingly reduced as compared with the molding load for forming at room temperature, as well as to a manufacturing method therefor.

## Background Art

In a steel sheet used for structural components in an automobile or the like, a high strength of 980 MPa or more is demanded for realizing collision safety for passengers and improvement in fuel cost performance. Meanwhile, the steel sheet is typically molded into a component shape at room temperature, and press-forming is carried out for this molding. Accordingly, it is demanded that the steel sheet has a good press-formability (which may hereafter be simply referred to as formability).

As a steel sheet having both of strength and formability, a TRIP (Transformation Induced Plasticity; transformation induced plasticity) steel sheet is known in the art (See, for example, Patent Literature 1). The TRIP steel sheet is a steel sheet containing metastable austenite (which may hereafter be referred to as retained austenite and may be denoted as retained $\gamma$) and, when the steel sheet is deformed by receiving stress, the steel sheet produces an effect of prompting hardening of the deformed part to prevent concentration of stain by being transformed into martensite, whereby uniform deformability is improved to exhibit a good elongation. Though the elongation of the TRIP steel sheet is good in this manner, the strength of the steel sheet itself is high, so that the molding load during the press-forming is large, thereby imposing an excessively large burden on a pressing machine. Accordingly, depending on the component shape, there may be cases in which the TRIP steel sheet cannot be applied. Thus, it is desired to reduce the burden on the pressing machine and reduce the molding load during the press-forming. In other words, it is recommended that the steel sheet has a low strength during the press-forming and has a high strength during use after the press-forming.

As a method for reducing the molding load during the press-forming, there can be considered, for example, a method of press-molding the steel sheet after heating the steel sheet to a temperature of about 100°C to an $A_1$ point. Generally, by heating the steel sheet, the deformation resistance decreases, so that the molding load during the press-forming can be reduced.

As a technique for reducing the molding load during the press-forming by molding the steel sheet after heating, techniques disclosed in Patent Literatures 2 and 3 are known in the art.

Patent Literature 2 discloses a high tension thin steel sheet having a tensile strength of 450 MPa or more and being excellent in hot temperature moldability and shape fixing property that is suitable for the forming method that performs press-molding by heating the steel sheet to a temperature region of from 350°C to the $A_1$ point. This high tension thin steel sheet satisfies a predetermined component composition; the ratio of the tensile strength at 450°C relative to the tensile strength at room temperature is 0.7 or less; and the crystal structure of the steel is such that the volume ratio of a martensite phase is 10% or more and 80% or less; an average diameter of each of the dispersed martensite phases is 8 $\mu$m or less; and the volume ratio of the ferrite phase is the largest in the structure other than martensite. In the high tension thin steel sheet disclosed in Patent Literature 2, degree of decrease in the tensile strength at 150°C is small and, in order to obtain a sufficient load reducing effect during the molding, there is eventually a need to heat the steel sheet to the temperature region of from 350°C to the $A_1$ point for press-molding. However, when the steel sheet is heated to such a high temperature, the surface state of the steel sheet is deteriorated by oxidation, and also the energy for heating the steel sheet increases.

Patent Literature 3 discloses a high strength steel sheet providing sufficient decrease in strength during the hot temperature molding at 150 to 250°C and being capable of ensuring a high strength of 980 MPa or more during use at room temperature after the molding. This high strength steel sheet contains retained austenite at 5 to 20% in terms of area ratio relative to the overall structure, where the C concentration of the retained austenite ($C_{\gamma R}$) is controlled to be 0.5 to 1.0 mass%.

Patent Literature 4 discloses a high strength hot-dip galvanized steel sheet with specific amounts of C, Si, Mn, P, S, Ti, A1, and N with the remainder being iron and unavoidable impurities.

Meanwhile, depending on the shape of the structural components and the like, there are cases in which not only the hot temperature pressing but also the press-molding at room temperature is further carried out in addition to the press-molding at a hot temperature. Accordingly, it is demanded that the steel sheet used for the aforementioned components and the like is excellent in formability at room temperature as well.

The heating temperature of the high strength steel sheet disclosed in Patent Literature 3 is 150 to 250°C, so that the problems such as generated in the high tension thin steel sheet disclosed in Patent Literature 2 do not arise; however, in Patent Literature 3, no consideration is made on the formability at room temperature.

**Citation List**

**Patent Literature**

Patent Literature 1: Japanese Patent No. 5728115
Patent Literature 2: Japanese Unexamined Patent Publication No. 2003-113442
Patent Literature 3: Japanese Unexamined Patent Publication No. 2013-181184
Patent Literature 4: EP 2 873 746 A1

**Summary of Invention**

The present invention has been made by paying attention to the circumstances such as mentioned above, and an object thereof is to provide a high strength steel sheet having a tensile strength of 980 MPa or more and being excellent in formability at room temperature, particularly in elongation and hole expansion formability, in which the molding load for forming at a hot temperature of 100 to 350°C is reduced, as well as a manufacturing method therefor.

One aspect of the present invention is a high strength steel sheet satisfying, in mass%, C: 0.10% to 0.5%, Si: 1.0% to 3%, Mn: 1.5% to 3%, P: more than 0% and 0.1 % or less, S: more than 0% and 0.05% or less, Al: 0.005% to 1%, and N: more than 0% and 0.01% or less, with a balance being iron and inevitable impurities, in which (1) a metal structure of the steel sheet contains polygonal ferrite, bainite, tempered martensite, and retained austenite; (2) when the metal structure is observed with a scanning electron microscope, the metal structure satisfies polygonal ferrite: 10 to 50 area%, bainite: 10 to 50 area%, and tempered martensite: 10 to 80 area%, with respect to the metal structure overall; and (3) when the metal structure is measured by X-ray diffractometry, the metal structure satisfies retained austenite: 5.0 volume% or more, retained austenite with a carbon concentration of 1.0 mass% or less: 3.5 volume% or more, and retained austenite with a carbon concentration of 0.8 mass% or less: 2.4 volume% or less, with respect to the metal structure overall.

The foregoing and other objects, features, and advantages of the present invention will be apparent from the following detailed description and the attached drawings.

**Brief Description of Drawings**

FIG. 1 is a model view showing a diffraction peak of retained $\gamma$ as measured by X-ray diffractometry.
FIG. 2 is a model view for describing a mode in which at least one selected from the group consisting of retained austenite and carbide is arrayed in series.
FIG. 3A is a model view for describing a distribution state of bainite and tempered martensite.
FIG. 3B is a model view for describing a distribution state of bainite and tempered martensite.
FIG. 4 is a model view showing an annealing pattern in manufacturing a high strength steel sheet according to the present invention.

**Description of Embodiments**

Hereafter, embodiments according to the present invention will be described; however, the present invention is not limited to these alone.

First, a metal structure of a high strength steel sheet according to an embodiment of the present invention will be described.

The metal structure of the high strength steel sheet is a mixed structure containing polygonal ferrite, bainite, tempered martensite, and retained austenite.

Further, in the metal structure of the high strength steel sheet, it is important that

(A) when the metal structure is observed with a scanning electron microscope, the metal structure satisfies:

polygonal ferrite: 10 to 50 area%,

bainite: 10 to 50 area%, and
tempered martensite: 10 to 80 area%,

with respect to the metal structure overall; and
(B) when the metal structure is measured by X-ray diffractometry, the metal structure satisfies:

retained austenite: 5.0 volume% or more,
retained austenite with a carbon concentration of 1.0 mass% or less: 3.5 volume% or more, and
retained austenite with a carbon concentration of 0.8 mass% or less: 2.4 volume% or less, with respect to the metal structure overall.

First, the requirements of the above (A) will be described after the requirements of the above (B) characterizing the present invention are described.

[Retained γ]

The retained γ is a structure needed for improving the uniform deformability by the TRIP effect to ensure a good elongation. Also, the retained γ is a structure needed for ensuring the strength.

In the high strength steel sheet, in order that such an effect may be exhibited, the volume ratio of retained γ (which may hereafter be denoted as $V\gamma_R$) is set to be 5.0% or more, preferably 8% or more, and more preferably 10% or more, with respect to the metal structure overall. However, when the amount of generation of retained γ is excessive, the hole expansion ratio λ decreases, and formability at room temperature cannot be improved. Accordingly, in the high strength steel sheet, the volume ratio of retained γ($V\gamma_R$) is set to be preferably 30% or less, more preferably 25% or less, with respect to the metal structure overall.

The retained γ may be generated between laths, or may exist in an agglomerate form as a part of an MA mixture phase in which fresh martensite and retained γ are combined, in a collective body of a lath-shaped structure, for example, a block, a packet, or the like, or on a prior γ grain boundary. MA is an abbreviation for Martensite-Austenite Constituent.

The volume ratio of retained γ($V\gamma_R$) is a value measured by X-ray diffractometry.

In the high strength steel sheet, it is particularly important that, when the metal structure is measured by X-ray diffractometry, the volume ratio of retained austenite with a carbon concentration of 1.0 mass% or less [which may hereafter be denoted as $V\gamma_R(C \leq 1.0\%)$] is 3.5 volume% or more, and the volume ratio of retained austenite with a carbon concentration of 0.8 mass% or less [which may hereafter be denoted as $V\gamma_R(C<0.8\%)$] is 2.4 volume% or less, with respect to the metal structure overall. In other words, it is important that retained γ having a carbon concentration exceeding 0.8 mass% and being 1.0 mass% or less is generated appropriately, as will be described below.

First, description will be given on a fact that the load at a hot temperature can be sufficiently reduced by setting the volume ratio of retained γ with a carbon concentration of 1.0 mass% or less to be a predetermined value or more.

As an index of load reduction during the hot temperature molding, it is possible to use ΔTS, that is, the value obtained by subtracting the tensile strength at a hot temperature (which may hereafter be denoted as hot temperature TS) from the tensile strength at room temperature (which may hereafter be denoted as room temperature TS) (room temperature TS - hot temperature TS), as described in the above Patent Literature 3. It can be stated that the larger the ΔTS is, the more sufficiently the load at a hot temperature is reduced.

In order to increase the value of ATS, there can be considered a method of using:

(1) decrease in the deformation resistance by increase in the forming temperature; and
(2) the fact that retained γ improves the tensile strength TS because of being unstable at room temperature, but does not improve the tensile strength TS because of being stable at a hot temperature.

Further, the present inventors have found out that, since the above (1) is not dependent on the material, it is effective to allow the retained γ shown in the above (2) to exist in order to obtain a steel sheet having a larger ΔTS, and that, for that purpose, it is effective to positively generate retained γ having a low carbon concentration, specifically, the volume ratio $V\gamma_R(C \leq 1.0\%)$ of retained γ with a carbon concentration of 1.0 mass% or less, at 3.5 volume% or more with respect to the metal structure overall. The $V\gamma_R(C \leq 1.0\%)$ is preferably 4.0 volume% or more, more preferably 4.5 volume% or more. An upper limit of the $V\gamma_R(C \leq 1.0\%)$ is not particularly limited, and the maximum value of $V\gamma_R(C \leq 1.0\%)$ is equal to the volume ratio of retained γ contained in the steel sheet. The $V\gamma_R(C \leq 1.0\%)$ is preferably 10 volume% or less, more preferably 8 volume% or less.

As described above, it has been found out that the molding load at a hot temperature can be reduced by positively generating retained γ with a carbon concentration of 1.0 mass% or less. However, when retained γ with a carbon concentration being too low is generated in a large amount, the retained γ is transformed into hard fresh martensite (FM) at an initial stage when hole expansion forming is carried out at room temperature, to generate a site of strain concentration, thereby considerably decreasing the hole expansion ratio λ and deteriorating the formability at room temperature. Accordingly, generation of retained γ with a carbon concentration being too low must be suppressed in order to increase the hole expansion ratio λ and to improve the formability at room temperature.

Based on such a viewpoint, studies were made on a relationship between the carbon concentration of retained γ and the formability at room temperature, whereupon it has been found out that it is effective to set the volume ratio $V\gamma_R(C \leq 0.8\%)$ of retained γ with a carbon concentration of 0.8 mass% or less to be 2.4 volume% or less with respect to the metal structure overall. The $V\gamma_R(C \leq 0.8\%)$ is preferably 2.3 volume% or less, more preferably 2.2 volume% or less, and still more preferably 2.1 volume% or less. The smaller the $V\gamma_R(C \leq 0.8\%)$ is, the more preferable it is. The $V\gamma_R(C \leq 0.8\%)$ is most preferably 0 volume%.

As described above, by setting the $V\gamma_R(C \leq 1.0\%)$ to be 3.5 volume% or more, the ΔTS can be increased, and the molding load at a hot temperature can be reduced as compared with the molding load at room temperature; and, by suppressing the $V\gamma_R(C \leq 0.8\%)$ to be 2.4 volume% or less, the hole expansion ratio λ when hole expansion forming is carried out at room temperature can be increased, and the formability at room temperature can be improved.

Here, the present inventors have confirmed that, since retained γ with a carbon concentration exceeding 1.0 mass% is stable both at room temperature and at a hot temperature, little influence is given to ΔTS and the hole expansion ratio λ at room temperature.

Here, a relationship between the prior art technique and the present invention will be described.

An idea of controlling the stability of retained y by means of the carbon concentration of retained y is conventionally well known. Further, for example, as disclosed in the above Patent Literature 3, a technique is already known in which the strength during the molding at 150 to 250°C is lowered by controlling the average value of the carbon concentration of retained γ to be within a predetermined range.

In contrast, the present invention is largely different from the prior art technique in that attention is paid not to the average carbon concentration of retained γ but to the carbon concentration of individual retained y, and that retained y with a carbon concentration exceeding 0.8 mass% and being 1.0 mass% or less is positively generated. In other words, the present inventors have found out a knowledge that, even when the amount of generation of retained γ is the same and the average value of the carbon concentration of retained y is the same, the obtained characteristics greatly change when the amount of generation of retained γ with a carbon concentration of 0.8 mass% or less is different from the amount of generation of retained γ with a carbon concentration of 1.0 mass% or less.

A further comment on the above Patent Literature 3 is that, since the average value of carbon concentration in retained γ contained in the steel sheet disclosed in Patent Literature 3 is extremely low, it is conjectured that the amount of generation of retained γ with a carbon concentration of 0.8 mass% or less is considerably large and that the configuration structure is different.

Next, a method for measuring each of the volume ratio $(V\gamma_R)$ of retained y, the average carbon concentration (which may hereafter be denoted as $\%C_{avg}$) of retained y, and the carbon concentration distribution of retained γ with respect to the metal structure overall will be described.

The volume ratio of retained γ and the average carbon concentration of retained γ are measured by X-ray diffractometry after grinding down to the thickness of 1/4 of the steel sheet and then chemically polishing the steel sheet. For the principle of measurement, reference can be made to ISIJ Int. Vol. 33, year of 1933, No. 7, p. 776. Here, in this X-ray diffractometry, an X-ray diffractometer (RINT-1500) manufactured by Rigaku Corporation was used as an X-ray diffraction apparatus, and a Co-Kα beam was used as the X-ray.

The carbon concentration distribution of retained y was determined in the following manner by using three diffraction peaks of $(200)_\gamma$, $(220)_\gamma$, and $(311)_\gamma$ measured with use of the above X-ray diffraction apparatus.

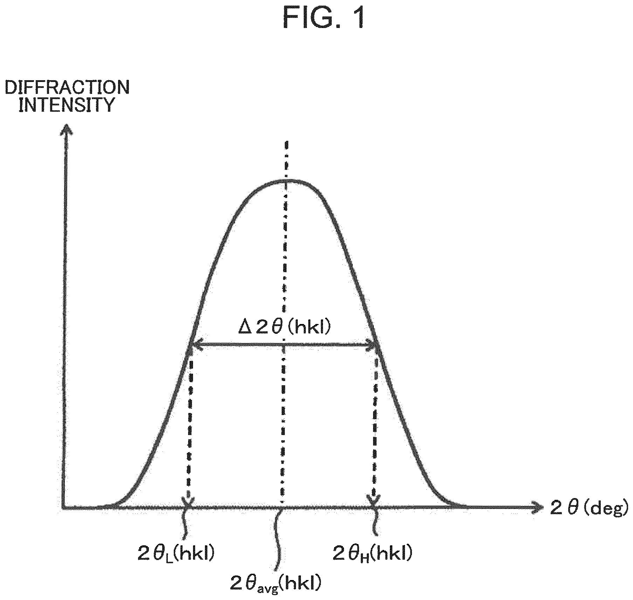

First, as shown in the model view of FIG. 1, for each of the three diffraction peaks of $(200)_\gamma$, $(220)_\gamma$, and $(311)_\gamma$, 2θ $(2\theta_{avg}(hkl))$ at which the diffraction intensity attains the maximum and the half value width Δ2θ(hkl) thereof were determined. Here, (hkl) represents (200), (220), or (311) (The same applies hereafter). Here, FIG. 1 is a model view showing a diffraction peak of retained y as measured by X-ray diffractometry.

Subsequently, from the above $2\theta_{avg}(hkl)$, d(hkl) was determined from the following formula (1) using the Bragg conditions: $\lambda_B = 2d\sin\theta$ (d: lattice surface interval, $\lambda_B$: wavelength of Co-Kα beam).

$$d(hkl) = \lambda_B/\{2\sin(2\theta_{avg}(hkl)/2)\} \quad \cdots(1)$$

Further, by the following formula (2), the lattice constants $a_0(hkl)$ were determined, and the lattice constant $a_0$ was determined by calculating an arithmetic mean of those three lattice constants $a_0(hkl)$.

$$a_0(hkl) = d(hkl)\sqrt{(h^2 + k^2 + l^2)} \quad \cdots(2)$$

Further, the carbon concentration %C$_{avg}$ (unit: mass%) was determined by using the following formula (3).

$$\%C_{avg} = (1/0.033) \times (a_0 - 3.572) \quad \cdots(3)$$

Next, the half value width $\Delta\%C$ of the carbon concentration distribution of retained $\gamma$ was determined by the following procedure.

First, the diffraction angles at the upper limit and lower limit of the half value width $\Delta2\theta(hkl)$ of the diffraction angle $2\theta(hkl)$ of each peak were determined by the following formulas (4) and (5) (See FIG. 1).

$$2\theta_L(hkl) = 2\theta_{avg}(hkl) - \Delta2\theta(hkl)/2 \quad \cdots(4)$$

$$2\theta_H(hkl) = 2\theta_{avg}(hkl) + \Delta2\theta(hkl)/2 \quad \cdots(5)$$

Then, the upper and lower limit values %C$_L$ and %C$_H$ of the half value width of the carbon concentration distribution were determined by using the Bragg conditions and the above formulas (1) to (3) according to the same procedure as described above by using the above $2\theta_L(hkl)$ and $2\theta_H(hkl)$, respectively. Further, the half value width $\Delta\%C$ of the carbon concentration distribution was determined by the following formula (6).

$$\Delta\%C = \%C_H - \%C_L \quad \cdots(6)$$

Further, assuming that the carbon concentration distribution is the normal distribution, the standard deviation $\sigma\%C$ was calculated in the following manner from the above half value width $\Delta\%C$. That is to say, the probability density function f(x) of the normal distribution is represented by the following formula (7) from the average value u and the standard deviation $\sigma$.

$$f(x) = \{1/\sqrt{(2\pi\sigma^2)}\} \times \exp\{-(x-u)^2/(2\sigma^2)\} \quad \cdots(7)$$

The probability f(u) at the average value is determined using the following formula (8) by substituting x = u in the above formula (7).

$$f(u) = 1/\sqrt{(2\pi\sigma^2)} \quad \cdots(8)$$

Further, since the probability density f(%C$_{avg}$ $\pm$ $\Delta\%C/2$) at the values (%C$_{avg}$ $\pm$ $\Delta\%C/2$) obtained by moving upward and downward from the average value u = %C$_{avg}$ by 1/2 of the half value width $\Delta\%C$ is 1/2 of the probability density f(u) = f(%C$_{avg}$) at the average value u=%C$_{avg}$, the relationship of (9) is obtained from the above formulas (7) and (8).

$$\{1/\sqrt{(2\pi\sigma\%C^2)}\} \times \exp\{-(\Delta\%C/2)^2/(2\sigma\%C^2)\} = 1/\{2\sqrt{(2\pi\sigma\%C^2)}\} \quad \cdots(9)$$

By modification of the above formula (9), the following formula (10) is deduced as a formula for determining the standard deviation $\sigma\%C$ from the half value width $\Delta\%C$, so that the standard deviation $\sigma\%C$ was calculated by substituting the half value width $\Delta\%C$ in this formula (10).

$$\sigma\%C = \sqrt{\{(\Delta\%C/2)^2/(2\ln2)\}} \quad \cdots(10)$$

Further, the following formula (12) was deduced as a formula for determining the volume ratio $V_{\gamma R}(C \leq 1.0\%)$ of retained $\gamma$ with a carbon concentration of 1.0 mass% or less with respect to the metal structure overall by the cumulative distribution function g(x) shown in the following formula (11) using the average value %C$_{avg}$ and the standard deviation $\sigma\%C$ of the carbon concentration distribution in the retained $\gamma$ determined in the above-described manner, and $V_{\gamma R}(C \leq 1.0\%)$ was calculated using this formula (12).

$$g(x) = (1/2) \times [1 + erf\{(x - u)/\sqrt{(2\sigma^2)}\}] \quad \cdots(11)$$

$$V\gamma_R(C \leq 1.0\%) = V\gamma_R \times g(1.0) = V\gamma_R \times (1/2) \times [1 + erf\{(1.0 - \%C_{avg})/\sqrt{(2\sigma\%C^2)}\}] \quad \cdots(12)$$

Also, the following formula (13) was deduced as a formula for determining the volume ratio $V\gamma_R(C \leq 0.8\%)$ of retained $\gamma$ with a carbon concentration of 0.8 mass% or less with respect to the metal structure overall by the cumulative distribution function g(x) shown in the following formula (11) using the average value $\%C_{avg}$ and the standard deviation $\sigma\%C$ of the carbon concentration distribution in the retained $\gamma$ determined in the above-described manner, and $V\gamma_R(C \leq 0.8\%)$ was calculated using this formula (13).

$$V\gamma_R(C \leq 0.8\%) = V\gamma_R \times g(0.8) = V\gamma_R \times (1/2) \times [1 + erf\{(0.8 - \%C_{avg})/\sqrt{(2\sigma\%C^2)}\}] \quad \cdots(13)$$

In the above formulas (12) and (13), $V\gamma_R$ is a sum volume ratio of retained $\gamma$ with respect to the metal structure overall.
Next, the requirements of the above (A) will be described.

[Polygonal ferrite]

Polygonal ferrite is soft as compared with bainite and is a structure that functions to improve the formability at room temperature by enhancing the elongation of the steel sheet. In order that such a function may be exhibited, the area ratio of polygonal ferrite is set to be 10% or more, preferably 20% or more, and more preferably 25% or more, with respect to the metal structure overall. However, when the amount of generation of polygonal ferrite is excessive, the strength decreases, so that the area ratio of polygonal ferrite is set to be 50% or less, preferably 45% or less, and more preferably 40% or less, with respect to the metal structure overall.
The area ratio of polygonal ferrite can be measured with use of a scanning electron microscope.

[Bainite]

Bainite generated by bainite transformation is a structure that concentrates C into austenite and functions effectively in obtaining retained $\gamma$. Also, since bainite has a strength that lies between the strength of polygonal ferrite and the strength of tempered martensite, bainite is a structure that enhances both of strength and elongation with a good balance. In order that such a function may be exhibited, the area ratio of bainite is set to be 10% or more, preferably 15% or more, and more preferably 20% or more, with respect to the metal structure overall. However, when the amount of generation of bainite is excessive, the strength decreases, so that the area ratio of bainite is set to be 50% or less, preferably 40% or less, and more preferably 30% or less, with respect to the metal structure overall.
The above bainite is a structure in which an average of an interval of at least one kind selected from the group consisting of retained $\gamma$ and carbide with each other is 1 $\mu$m or more when the cross-section of the steel sheet is subjected to nital corrosion and then observed with a scanning electron microscope, and the scope of bainite means to include one in which carbide is partially deposited besides the bainitic ferrite in which no carbide is deposited.

[Tempered martensite]

Tempered martensite is a structure that functions to enhance both of strength and hole expansion ratio $\lambda$ with a good balance. In order that such a function may be exhibited, the area ratio of tempered martensite is set to be 10% or more, preferably 15% or more, and more preferably 20% or more, with respect to the metal structure overall. However, when the amount of generation of tempered martensite is excessive, decrease in the amount of generation of retained $\gamma$ is conspicuous, and the elongation decreases, so that the area ratio of tempered martensite is set to be 80% or less, preferably 70% or less, and more preferably 60% or less, with respect to the metal structure overall.
The above tempered martensite is a structure in which an average of an interval of at least one kind selected from the group consisting of retained $\gamma$ and carbide with each other is less than 1 $\mu$m when the cross-section of the steel sheet is subjected to nital corrosion and then observed with a scanning electron microscope.
Here, the "average of an interval of at least one kind selected from the group consisting of retained $\gamma$ and carbide with each other" will be described. The average is a value obtained by calculating an average of the results obtained by measuring the distance between the center positions of adjacent retained ys with each other, the distance between the center positions of adjacent carbides with each other, or the distance between the center positions of a certain retained γ and a carbide adjacent to the retained γ when the cross-section of the steel sheet is subjected to nital corrosion and then observed with a scanning electron microscope. The distance between the center positions means a distance that is obtained by determining the center position of each retained γ or each carbide and measuring the distance between the center positions of the most adjacent retained γs with each other, carbides with each other, or retained γ and carbide. The center position is obtained by determining the major axis and the minor axis of retained γ or carbide, and the center position is defined to be a position at which the major axis and the minor axis intersect with each other.

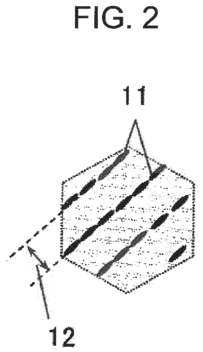

However, when the retained γ or carbide is deposited on a boundary of a lath, a plurality of retained γ and carbide are arrayed in series, and the mode assumes a needle-like shape or a plate-like shape. In this case, the distance between the center positions is not the distance between at least one kind selected from the group consisting of retained γ and carbide with each other but is defined to be a distance between a line 11 and a line 11 formed by at least one kind selected from the group consisting of retained γ and carbide arrayed in series in the major axis direction as shown in FIG. 2, that is, the lath-to-lath distance is defined to be the distance 12 between the center positions. Here, FIG. 2 is a model view for describing a mode in which at least one selected from the group consisting of retained austenite and carbide is arrayed in series.

The distribution state of bainite and tempered martensite is not particularly limited, so that both of bainite and tempered martensite may be generated in a prior austenite grain, or bainite and tempered martensite may be respectively generated in the prior austenite grains.

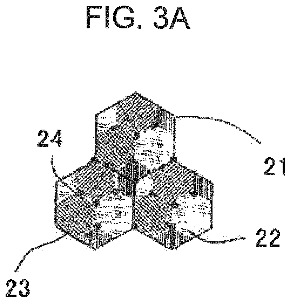

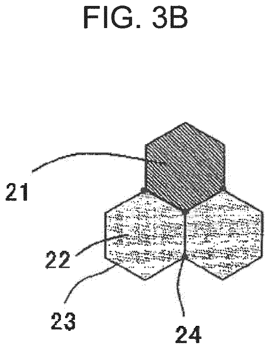

The distribution state of bainite and tempered martensite is schematically shown in FIGS. 3A and 3B. FIG. 3A shows a mode in which both of a bainite 21 and a tempered martensite 22 are mixedly generated in a prior austenite grain 23, and FIG. 3B shows a mode in which the bainite 21 and the tempered martensite 22 are respectively generated in the prior austenite grains 23. A black solid circle 24 shown in each of the figures represents an MA mixture phase. Here, FIGS. 3A and 3B are model views for describing a distribution state of bainite and tempered martensite.

[Others]

The metal structure of the high strength steel sheet may be made of polygonal ferrite, bainite, tempered martensite, and retained γ; however, the metal structure may include balance structures such as an MA mixture phase, pearlite, and fresh martensite as other structures within a range that does not deteriorate the function of the present invention. Any of these balance structures constitutes a point of start of cracks and deteriorates the formability at room temperature, so that the amount of the balance structures is preferably as small as possible. The amount of the balance structures is preferably 25 area% or less in total when the cross-section of the steel sheet is subjected to nital corrosion and then observed with a scanning electron microscope.

Here, the area ratios of polygonal ferrite, bainite, and tempered martensite are measured with use of a scanning electron microscope, whereas the volume ratio of retained γ is measured by X-ray diffractometry, so that the measurement methods are different. For this reason, a sum of the area ratios and the volume ratios of these structures may exceed 100%.

Next, a component composition of the high strength steel sheet according to the present embodiment will be described. Hereafter, % in the component composition means mass%.

The high strength steel sheet satisfies C: 0.10% to 0.5%, Si: 1.0% to 3%, Mn: 1.5% to 3%, P: more than 0% and 0.1% or less, S: more than 0% and 0.05% or less, Al: 0.005% to 1%, and N: more than 0% and 0.01% or less.

C is an element that enhances the strength of the steel sheet and is also an element that is necessary for ensuring retained γ by stabilizing austenite. In order that such an effect may be exhibited, the C amount is set to be 0.10% or more. The C amount is preferably 0.13% or more, more preferably 0.15% or more. However, when C is contained in an excessively large amount, the weldability is degraded, so that the C amount is set to be 0.5% or less. The C amount is preferably 0.30% or less, more preferably 0.25% or less.

Si is a solute-strengthening element and is an element that contributes to achievement of a higher strength of the steel sheet. Also, Si is an element that is important in condensing and stabilizing C in austenite by suppressing deposition of carbide and in ensuring retained γ. In order that such an effect may be exhibited, the Si amount is set to be 1.0% or more. The Si amount is preferably 1.2% or more, more preferably 1.3% or more. However, when Si is contained in an excessively large amount, reverse transformation of polygonal ferrite into austenite does not occur during the heating and soaking in annealing, so that polygonal ferrite remains in an excessively large amount, thereby causing insufficient strength. Also, a considerable scale is formed during the hot rolling to generate scale marks on the surface of the steel sheet, thereby degrading the surface property. Accordingly, the Si amount is set to be 3% or less. The Si amount is preferably 2.5% or less, more preferably 2.0% or less.

Mn functions as a hardenability improving element and is an element that enhances the strength of the steel sheet by suppressing generation of polygonal ferrite in an excessively large amount during the cooling. Also, Mn contributes to stabilization of retained γ. In order that such an effect may be exhibited, the Mn amount is set to be 1.5% or more. The Mn amount is preferably 1.8% or more, more preferably 2.0% or more. However, when Mn is contained in an excessively large amount, generation of bainite is considerably suppressed, so that a desired amount of bainite cannot be ensured, giving a poor balance between strength and elongation. Also, adverse effects such as generation of ingot cracks are given. From these reasons, the Mn amount is set to be 3% or less. The Mn amount is preferably 2.8% or less, more preferably 2.7% or less.

P is an inevitable impurity and, when contained in an excessively large amount, promotes grain boundary embrittlement by grain boundary segregation to degrade the formability at room temperature, so that the P amount is set to be 0.1% or less. The P amount is preferably 0.08% or less, more preferably 0.05% or less. The P amount is preferably as little as possible; however, P is typically contained at about 0.001%.

S is an inevitable impurity and, when contained in an excessively large amount, forms a sulfide-based inclusions such as MnS to generate a point of start of cracks to degrade the formability at room temperature, so that the S amount is set to be 0.05% or less. The S amount is preferably 0.01% or less, more preferably 0.005% or less. The S amount is preferably as little as possible; however, S is typically contained at about 0.0001%.

As with Si, A1 is an element that is important in ensuring retained $\gamma$ by suppressing deposition of carbide. Also, Al is an element that functions as a deoxidizing material. In order that such an effect may be exhibited, the A1 amount is set to be 0.005% or more. The A1 amount is preferably 0.010% or more, more preferably 0.03% or more. However, when A1 is contained in an excessively large amount, inclusions are deposited in a large amount in the steel sheet, and the formability at room temperature is degraded, so that the A1 amount is set to be 1% or less. The A1 amount is preferably 0.8% or less, more preferably 0.5% or less.

N is an inevitable impurity and, when N is contained in an excessively large amount, nitride is deposited in a large amount to generate a point of start of cracks to degrade the formability at room temperature, so that the N amount is set to be 0.01% or less. The N amount is preferably 0.008% or less, more preferably 0.005% or less. The N amount is preferably as little as possible; however, N is typically contained at about 0.001%.

The basic components of the high strength steel sheet are as described above, and the balance is made of iron and inevitable impurities. As the inevitable impurities, mingling of elements that are brought into the steel depending on the circumstances of raw materials, facility materials, production equipment, and the like is permitted within a range that does not deteriorate the effects of the present invention.

The high strength steel sheet may further contain, as other elements, at least one kind belonging to the following (a) to (e). Also, the elements belonging to the following (a) to (e) may be contained either alone or as a combination of a plurality of elements belonging to the following (a) to (e):

(a) at least one selected from the group consisting of Cr: more than 0% and 1% or less and Mo: more than 0% and 1% or less,
(b) at least one selected from the group consisting of Ti : more than 0% and 0.15% or less, Nb: more than 0% and 0.15% or less, and V: more than 0% and 0.15% or less,
(c) at least one selected from the group consisting of Cu: more than 0% and 1% or less and Ni: more than 0% and 1% or less,
(d) B: more than 0% and 0.005% or less, and
(e) at least one selected from the group consisting of Ca: more than 0% and 0.01% or less, Mg: more than 0% and 0.01% or less, and a rare earth element: more than 0% and 0.01% or less.

(a) Cr and Mo are elements that prevent decrease in strength by suppressing generation of polygonal ferrite in an excessively large amount during the cooling. In order that such an effect may be effectively exhibited, the Cr amount is preferably 0.02% or more, more preferably 0.1% or more, and still more preferably 0.2% or more. The Mo amount is preferably 0.02% or more, more preferably 0.1% or more, and still more preferably 0.2% or more. However, when Cr and Mo are contained in an excessively large amount, generation of bainite is considerably suppressed in the same manner as in the case of Mn, so that a desired amount of bainite cannot be ensured, and a poor balance between strength and elongation may be given. Accordingly, the Cr amount is preferably set to be 1% or less, more preferably 0.8% or less, and still more preferably 0.5% or less. The Mo amount is preferably set to be 1% or less, more preferably 0.8% or less, and still more preferably 0.5% or less. Either one or both of Cr and Mo may be contained.

(b) Ti, Nb, and V are each an element that functions to improve the strength and toughness of the steel sheet by making the metal structure finer. In order that such an effect may be effectively exhibited, the Ti amount is preferably 0.01% or more, more preferably 0.015% or more, and still more preferably 0.020% or more. The Nb amount is preferably 0.01% or more, more preferably 0.015% or more, and still more preferably 0.020% or more. The V amount is preferably 0.01% or more, more preferably 0.015% or more, and still more preferably 0.020% or more. However, when Ti, Nb, and V are contained in an excessively large amount, the effect is saturated. Also, a carbide may be deposited at the grain boundary, and the formability at room temperature may be degraded. Due to these reasons, the Ti amount is preferably set to be 0.15% or less, more preferably 0.12% or less, and still more preferably 0.10% or less. The Nb amount is preferably set to be 0.15% or less, more preferably 0.12% or less, and still more preferably 0.10% or less. The V amount is preferably set to be 0.15% or less, more preferably 0.12% or less, and still more preferably 0.10% or less. Any one kind selected from Ti, Nb, and V may be contained, or else, arbitrarily selected two or more kinds may be contained.

(c) Cu and Ni are elements that function to improve the corrosion resistance of the steel sheet. In order that such an effect may be effectively exhibited, the Cu amount is preferably 0.01% or more, more preferably 0.05% or more, and still more preferably 0.10% or more. The Ni amount is preferably 0.01% or more, more preferably 0.05% or more, and still more preferably 0.10% or more. However, when Cu and Ni are contained in an excessively large amount, the effect is saturated. Also, the hot temperature formability may be degraded. Due to these reasons, the Cu amount is preferably set to be 1% or less, more preferably 0.8% or less, and still more preferably 0.5% or less. The Ni amount is preferably set to be 1% or less, more preferably 0.8% or less, and still more preferably 0.5% or less. Either one or both of Cu and Ni may be contained.

(d) B is an element that prevents decrease in strength by suppressing generation of polygonal ferrite in an excessively large amount during the cooling in the same manner as in the cases of Cr and Mn. In order that such an effect may be effectively exhibited, the B amount is preferably 0.0001% or more, more preferably 0.0005% or more, and still more preferably 0.0010% or more. However, when B is contained in an excessively large amount, generation of bainite is considerably suppressed in the same manner as in the cases of Cr and Mn, so that a desired amount of bainite cannot be ensured, and a poor balance between strength and elongation may be given. Due to these reasons, the B amount is preferably set to be 0.005% or less, more preferably 0.004% or less, and still more preferably 0.003% or less.

(e) Ca, Mg, and a rare earth element (Rare Earth Metal; REM) are each an element that functions to finely disperse the inclusions in the steel sheet. In order that such an effect may be effectively exhibited, the Ca amount is preferably 0.0001% or more, more preferably 0.0005% or more, and still more preferably 0.0010% or more. The Mg amount is preferably 0.0001% or more, more preferably 0.0005% or more, and still more preferably 0.0010% or more. The rare earth element amount is preferably 0.0001% or more, more preferably 0.0005% or more, and still more preferably 0.0010% or more. However, when Ca, Mg, and a rare earth element are contained in an excessively large amount, the forgeability and the hot temperature formability may become poor. Due to this reason, the Ca amount is preferably set to be 0.01% or less, more preferably 0.005% or less, and still more preferably 0.003% or less. The Mg amount is preferably set to be 0.01% or less, more preferably 0.005% or less, and still more preferably 0.003% or less. The rare earth element amount is preferably set to be 0.01% or less, more preferably 0.005% or less, and still more preferably 0.003% or less. Any one kind selected from Ca, Mg, and a rare earth element may be contained, or else, arbitrarily selected two or more kinds may be contained.

Here, in the high strength steel sheet, the rare earth elements mean to include lanthanoid elements (15 elements from La to Lu), Sc (scandium), and Y (yttrium).

An electrogalvanized (EG: Electro-Galvanized) layer, a hot-dip galvanized (GI: Hot Dip Galvanized) layer, or a hot-dip galvannealed (GA: Hot Dip Galvannealed) layer may be provided on a surface of the high strength steel sheet. In other words, the scope of the present invention encompasses a high strength electrogalvanized steel sheet, a high strength hot-dip galvanized steel sheet, and a high strength hot-dip galvannealed steel sheet.

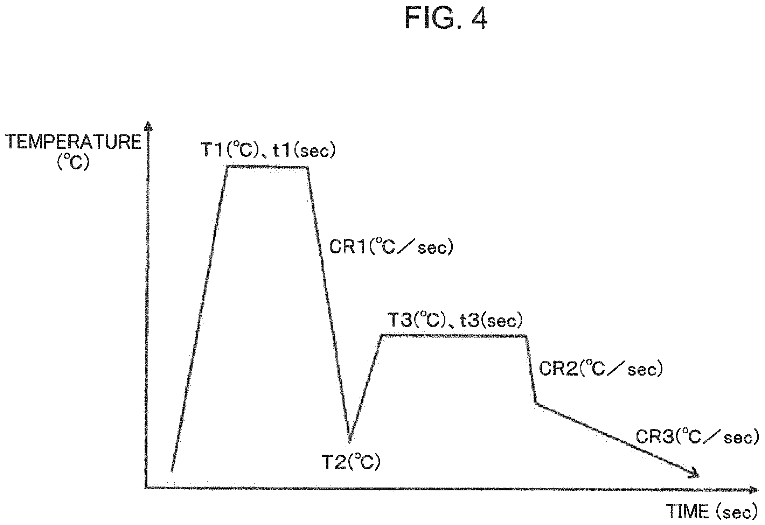

Next, a method for manufacturing a high strength steel sheet according to the present embodiment will be described with reference to FIG. 4. FIG. 4 is a model view showing an annealing pattern in manufacturing the high strength steel sheet, where the lateral axis represents time (second), and the longitudinal axis represents temperature (°C).

[Soaking step]

First, a steel sheet satisfying the above component composition is heated to a T1 temperature region, which is 800°C or higher and an $Ac_3$ point or lower, and is held for 40 seconds or more in the T1 temperature region for soaking (soaking step). The steel sheet may be a hot-rolled steel sheet or a cold-rolled steel sheet. Here, the soaking temperature in the T1 temperature region may hereafter be denoted as "T1", and the soaking time in the T1 temperature region may hereafter be denoted as "tl". Also, the holding means to include a mode in which the temperature fluctuates within the T1 temperature region besides the constant-temperature holding.

A predetermined amount of polygonal ferrite can be generated by soaking in a two-phase temperature region of polygonal ferrite and austenite. When the soaking temperature T1 in the T1 temperature region is too low, the polygonal ferrite is generated in an excessively large amount, and the strength decreases. Also, when the soaking temperature T1 is too low, the expansion structure generated during the cold rolling remains, and the elongation decreases, so that the formability at room temperature cannot be improved. Accordingly, the soaking temperature T1 is set to be 800°C or higher. The soaking temperature T1 is preferably 810°C or higher, more preferably 820°C or higher. However, when the soaking temperature T1 is too high, there will be an austenite singlephase region, and the amount of generation of polygonal ferrite becomes insufficient, so that the elongation decreases, and the formability at room temperature cannot be improved. Accordingly, the soaking temperature T1 is set to be the $Ac_3$ point or lower. The soaking temperature T1 is preferably ($Ac_3$ point - 10°C) or lower, more preferably ($Ac_3$ point - 20°C) or lower.

When the soaking time t1 in the T1 temperature region is too short, the steel sheet cannot be uniformly heated, so that carbide remains without being dissolved as a solid solute, and the generation of retained γ is suppressed. As a result, the elongation decreases, and the formability at room temperature cannot be improved. Accordingly, the soaking time t1 is set to be 40 seconds or more. The soaking time t1 is preferably 50 seconds or more, more preferably 80 seconds or more. An upper limit of the soaking time t1 is not particularly limited; however, when the soaking time t1 is too long, the productivity is aggravated. Accordingly, the soaking time t1 is preferably set to be 500 seconds or less, more preferably 450 seconds or less.

The temperature of the Ac$_3$ point of the steel sheet can be calculated on the basis of the following formula (II) disclosed in "The Physical Metallurgy of Steels" (William C. Leslie, published by Maruzen Co., Ltd. on May 31, 1985, p. 273). In the formula (II), brackets [ ] indicate the content (mass%) of each element, and calculation may be made by assuming that the content of an element that is not contained in the steel sheet is 0 mass%.

$$\text{Ac}_3 \text{ point (°C)} = 910 - 203 \times [\text{C}]^{1/2} + 44.7 \times [\text{Si}] - 30 \times [\text{Mn}] - 11 \times [\text{Cr}] + 31.5 \times [\text{Mo}] - 20 \times [\text{Cu}] - 15.2 \times [\text{Ni}] + 400 \times [\text{Ti}] + 104 \times [\text{V}] + 700 \times [\text{P}] + 400 \times [\text{Al}] \quad \cdots (\text{II})$$

[First cooling step]

After the soaking, the steel sheet is cooled down to an arbitrary cooling stop temperature T2 satisfying 350°C or lower and 100°C or higher when an Ms point represented by the following formula (I) is 350°C or higher, or else, the steel sheet is cooled down to an arbitrary cooling stop temperature T2 satisfying the Ms point or lower and 100°C or higher when the Ms point represented by the following formula (I) is lower than 350°C (first cooling step). Further, in the first cooling step, the steel sheet is cooled at an average cooling rate of 5°C/sec or more from 700°C down to a temperature which is the higher one of 300°C and the cooling stop temperature T2.

By controlling the average cooling rate (which may hereafter be denoted as CR1) in an interval from 700°C to the temperature which is the higher one of 300°C and the cooling stop temperature T2 after soaking, a predetermined amount of soft polygonal ferrite can be generated. In other words, when the average cooling rate CR1 in the aforementioned interval is smaller than 5°C/sec, the polygonal ferrite is generated in an excessively large amount, and the strength decreases. Accordingly, the average cooling rate CR1 in the interval must be controlled to be 5°C/sec or larger, and is preferably 10°C/sec or larger, more preferably 15°C/sec or larger. An upper limit of the average cooling rate CR1 in the interval is not particularly limited; however, when the average cooling rate CR1 is too large, it will be difficult to perform temperature control. Accordingly, the average cooling rate CR1 in the interval is preferably 80°C/sec or smaller, more preferably 60°C/sec or smaller.

The cooling stop temperature T2 is set to be 100 to 350°C. However, when an Ms point calculated by the following formula (I) is lower than 350°C, the cooling stop temperature T2 is set to be 100°C to the Ms point.

When the cooling stop temperature T2 is too low, tempered martensite is generated in an excessively large amount, and the retained γ amount becomes small, so that the elongation decreases, and the formability at room temperature cannot be improved. Also, when the cooling stop temperature T2 is too low, retained γ with a carbon concentration exceeding 1.0 mass% is generated in a large amount, and the amount of retained γ with a carbon concentration of 1.0 mass% or less becomes comparatively small, so that ΔTS decreases, and the molding load at a hot temperature cannot be sufficiently reduced as compared with the molding load at room temperature. The reason why the retained γ with a carbon concentration exceeding 1.0 mass% is generated in a large amount seems to be that retained γ having a film form remains between the laths within the tempered martensite, and the carbon concentration of this retained γ is high. Accordingly, the cooling stop temperature T2 is set to be 100°C or higher. The cooling stop temperature T2 is preferably 110°C or higher, more preferably 120°C or higher. However, when the cooling stop temperature T2 is too high, the amount of generation of tempered martensite becomes small, so that the bainite transformation occurring thereafter hardly proceeds, and the C concentration into austenite hardly proceeds. As a result, there will be a large amount of retained γ with a carbon concentration of 0.8 mass% or less, so that the hole expansion ratio λ decreases, and the formability at room temperature cannot be improved. Accordingly, when the Ms point is 350°C or higher, the cooling stop temperature T2 is set to be 350°C or lower. The cooling stop temperature T2 is preferably 330°C or lower, more preferably 300°C or lower. On the other hand, when the Ms point is lower than 350°C, the cooling stop temperature T2 is set to be the Ms point or lower. The cooling stop temperature T2 is preferably (Ms point - 20°C) or lower, more preferably (Ms point - 50°C) or lower.

The temperature of the Ms point can be calculated on the basis of the following formula (I) obtained by taking the polygonal ferrite fraction (Vf) into consideration in the formula disclosed in the above "The Physical Metallurgy of Steels" (p. 231). In the following formula (I), brackets [ ] indicate the content of each element (mass%), and calculation may be made by assuming that the content of an element that is not contained in the steel sheet is 0 mass%. The value Vf represents the polygonal ferrite fraction (area%); however, since it is difficult to directly measure the polygonal ferrite fraction during the production, Vf may be defined as the polygonal ferrite fraction in a sample separately obtained by performing the soaking step under the same conditions as the production conditions of the high strength steel sheet and thereafter cooling to room temperature at the same average cooling rate as in the production conditions of the high strength steel sheet in the first cooling step.

$$\text{Ms point (°C)} = 561 - 474 \times [\text{C}]/(1 - \text{Vf}/100) - 33 \times [\text{Mn}] - 17 \times [\text{Ni}] - 17 \times [\text{Cr}] - 21 \times [\text{Mo}] \quad \cdots(\text{I})$$

[Reheating step]

After the steel sheet is cooled to the cooling stop temperature T2, the steel sheet is reheated to a T3 temperature region exceeding 350°C and being 540°C or lower, and the steel sheet is held for 50 seconds or more in the T3 temperature region (reheating step). Here, the reheating temperature in the T3 temperature region may hereafter be denoted as "T3", and the holding time in the T3 temperature region may hereafter be denoted as "t3". Also, the holding means to include a mode in which the temperature fluctuates within the T3 temperature region besides the constant-temperature holding.

By holding the steel sheet in the T3 temperature region for 50 seconds or more, retained $\gamma$ with a carbon concentration exceeding 0.8 mass% and being 1.0 mass% or less can be generated, so that it is possible to realize a high strength steel sheet in which the molding load at a hot temperature is reduced while the formability at room temperature is maintained to be good.

When the reheating temperature T3 is too low, the amount of generation of retained $\gamma$ with a carbon concentration of 1.0 mass% or less becomes small, and $\Delta$TS decreases, so that the molding load at a hot temperature cannot be reduced. Accordingly, the reheating temperature T3 is set to be higher than 350°C. The reheating temperature T3 is preferably 360°C or higher, more preferably 370°C or higher. However, when the reheating temperature T3 is too high, the bainite transformation does not proceed sufficiently, so that the retained $\gamma$ amount decreases, and the elongation EL decreases. Also, within the retained $\gamma$, the amount of retained $\gamma$ with a carbon concentration of 0.8 mass% or less becomes large, and the hole expansion ratio $\lambda$ decreases. As a result, the formability at room temperature cannot be improved. Accordingly, the reheating temperature T3 is set to be 540°C or lower. The reheating temperature T3 is preferably 520°C or lower, more preferably 500°C or lower.

Also, when the holding time t3 is too short, the bainite transformation does not proceed sufficiently, so that C concentration into austenite does not proceed sufficiently, and the amount of generation of retained $\gamma$ decreases. As a result, the elongation EL decreases. Also, there will be variation in the degree of concentration of C into each austenite, so that the amount of retained $\gamma$ with a carbon concentration of 0.8 mass% or less becomes large, and the hole expansion ratio $\lambda$ decreases. As a result, the formability at room temperature is degraded. Accordingly, the holding time t3 is set to be 50 seconds or more. The holding time t3 is preferably 80 seconds or more, more preferably 100 seconds or more. An upper limit of the holding time t3 is not particularly limited; however, in consideration of the productivity, the holding time t3 is preferably, for example, 20 minutes or less.

[Second cooling step]

After the steel sheet is held in the reheating step, the steel sheet is cooled at an average cooling rate of 10°C/sec or more from the T3 temperature region down to 300°C, and further the steel sheet is cooled at an average cooling rate exceeding 0°C/sec and being less than 10°C/sec from 300°C down to 150°C (second cooling step). In cooling the steel sheet from the above T3 temperature region to 150°C after the holding, it is important to carry out two-stage cooling with 300°C being a boundary. On the high-temperature side till 300°C, $\Delta$TS can be increased by quick cooling, so that the molding load at a hot temperature can be reduced. On the low-temperature side from 300°C, the hole expansion ratio $\lambda$ can be increased by slow cooling, so that the formability at room temperature can be improved.

In other words, when the average cooling rate down to 300°C (which may hereafter be denoted as CR2) after reheating is too small, the bainite transformation and concentration of C into untransformed austenite proceed during the cooling, so that the amount of retained $\gamma$ with a carbon concentration exceeding 1.0 mass% increases, while the amount of retained $\gamma$ with a carbon concentration of 1.0 mass% or less decreases. As a result, $\Delta$TS decreases, and the molding load at a hot temperature cannot be reduced. Accordingly, the average cooling rate CR2 must be controlled to be 10°C/sec or more and is preferably 15°C/sec or more, more preferably 20°C/sec or more. An upper limit of the average cooling rate CR2 is not particularly limited; however, when the average cooling rate CR2 is too large, it will be difficult to perform temperature control. Accordingly, the average cooling rate CR2 is preferably 80°C/sec or smaller, more preferably 60°C/sec or smaller.

On the other hand, though bainite transformation does not proceed during the cooling from 300°C to 150°C, diffusion of C proceeds. Accordingly, by setting the average cooling rate in this temperature region (which may hereafter be denoted as CR3) to be small, the amount of generation of retained γ with a carbon concentration of 0.8 mass% or less can be reduced. The reason for this is unknown; however, it can be considered that, among the variations of the C concentration generated in each retained γ, C is diffused into the retained γ having a C concentration lower than the original C concentration during the cooling, so that the amount of generation of retained γ having a low carbon concentration can be reduced. A supply source of C seems to be the tempered martensite or the like. Also, in the fresh martensite (FM) transformed inevitably from γ, self-tempering proceeds during the cooling. As a result, the hole expansion ratio λ increases, and the formability at room temperature is improved. Accordingly the average cooling rate CR3 in the interval must be controlled to be smaller than 10°C/sec, and is preferably 5°C/sec or smaller, more preferably 2°C/sec or smaller.

After the steel sheet is cooled to 150°C, the steel sheet may be cooled to room temperature in accordance with a conventional method.

[Plating]

An electrogalvanized layer, a hot-dip galvanized layer, or a hot-dip galvannealed layer may be formed on a surface of the high strength steel sheet.

The conditions for forming the electrogalvanized layer, the hot-dip galvanized layer, or the hot-dip galvannealed layer are not particularly limited, and an electrogalvanization (EG) treatment, a hot-dip galvanization (GI) treatment, or a hot-dip galvannealing (GA) treatment of a conventional method can be adopted. By this, an electrogalvanized steel sheet (which may hereafter be referred to as "EG steel sheet"), a hot-dip galvanized steel sheet (which may hereafter be referred to as "GI steel sheet"), and a hot-dip galvannealed steel sheet (which may hereafter be referred to as "GA steel sheet") can be obtained.

As a method for manufacturing the EG steel sheet, there can be considered, for example, a method in which, after the steel sheet is subjected to the second cooling step, the steel sheet may be energized while being immersed in a zinc solution of 55°C, so as to perform an electrogalvanization treatment.

As a method for manufacturing the GI steel sheet, a hot-dip galvanization treatment may be carried out simultaneously with the reheating step. That is, after the steel sheet is reheated to the T3 temperature region, the steel sheet may be immersed into a plating bath adjusted to have a temperature within the T3 temperature region to perform hot-dip galvanization, so that the hot-dip galvanization and the holding in the T3 temperature region may be simultaneously carried out. At this time, it is sufficient that the staying time in the T3 temperature region satisfies the requirements of the holding time t3.

As a method for manufacturing the GA steel sheet, hot-dip galvanization may be carried out at a temperature within the above T3 temperature region, and thereafter an alloying treatment may be carried out successively in the T3 temperature region. At this time, it is sufficient that the staying time in the T3 temperature region satisfies the requirements of the holding time t3.

The galvanizing adhesion amount is not particularly limited and may be set to be, for example, about 10 to 100 g/m² per one surface.

The sheet thickness of the high strength steel sheet is not particularly limited; however, the steel sheet may be, for example, a thin steel sheet having a sheet thickness of 3 mm or less.

In the high strength steel sheet, the tensile strength (TS) is 980 MPa or more, preferably 1100 MPa or more.

The high strength steel sheet is excellent in formability at room temperature (TS × EL, λ). Specifically, in the high strength steel sheet, TS × elongation (EL) is preferably 16000 MPa·% or more, more preferably 18000 MPa·% or more. Further, in the high strength steel sheet, the hole expansion ratio λ is preferably 20% or more, more preferably 25% or more.

As described above, the high strength steel sheet is excellent in formability at room temperature (TS × EL, λ), and moreover the molding load at a hot temperature is sufficiently reduced. Specifically, in the high strength steel sheet, ΔTS is preferably 150 MPa or more, more preferably 180 MPa or more. This hot-temperature forming means that molding is carried out at a temperature of about 100 to 350°C.

The high strength steel sheet can be suitably used as a material of a structural component of an automobile. Examples of the structural component of an automobile include crash parts such as front and rear side-members and crash boxes, reinforcements such as pillars (for example, center pillar reinforcements and the like), car body components such as roof rail reinforcements, side sills, floor members, and kick sections, shock resistant absorbing components such as bumper reinforcements and door impact beams, and sheet components.

While the present specification discloses various modes of techniques as described above, principal techniques among these will be summarized as follows.

One aspect of the present invention is a high strength steel sheet satisfying, in mass%, C: 0.10% to 0.5%, Si: 1.0% to 3%, Mn: 1.5% to 3%, P: more than 0% and 0.1 % or less, S: more than 0% and 0.05% or less, Al: 0.005% to 1%, and N: more than 0% and 0.01% or less, with a balance being iron and inevitable impurities, in which (1) a metal structure of the steel sheet contains polygonal ferrite, bainite, tempered martensite, and retained austenite; (2) when the metal structure is observed with a scanning electron microscope, the metal structure satisfies polygonal ferrite: 10 to 50 area%, bainite: 10 to 50 area%, and tempered martensite: 10 to 80 area%, with respect to the metal structure overall; and (3) when the metal structure is measured by X-ray diffractometry, the metal structure satisfies retained austenite: 5.0 volume% or more, retained austenite with a carbon concentration of 1.0 mass% or less: 3.5 volume% or more, and retained austenite with a carbon concentration of 0.8 mass% or less: 2.4 volume% or less, with respect to the metal structure overall.

According to such a configuration, a high strength steel sheet having a good elongation and hole expansion formability at room temperature and having a tensile strength of 980 MPa or more in which the molding load for forming at a hot temperature of 100 to 350°C is outstandingly reduced as compared with the molding load for forming at room temperature, can be provided.

The high strength steel sheet may further contain, as other elements, one or more selected from the group consisting of Cr: more than 0% and 1% or less and Mo: more than 0% and 1% or less, in mass%.

The high strength steel sheet may further contain, as other elements, one or more selected from the group consisting of Ti : more than 0% and 0.15% or less, Nb: more than 0% and 0.15% or less, and V: more than 0% and 0.15% or less, in mass%.

The high strength steel sheet may further contain, as other elements, one or more selected from the group consisting of Cu: more than 0% and 1% or less and Ni: more than 0% and 1% or less, in mass%.

The high strength steel sheet may further contain, as another element, B: more than 0% and 0.005% or less in mass%.

The high strength steel sheet may further contain, as other elements, one or more selected from the group consisting of Ca: more than 0% and 0.01% or less, Mg: more than 0% and 0.01% or less, and a rare earth element: more than 0% and 0.01% or less, in mass%.

The scope of the high strength steel sheet described above encompasses a high strength steel sheet having an electrogalvanized layer, a hot-dip galvanized layer, or a hot-dip galvannealed layer on a surface of the steel sheet.

Also, another aspect of the present invention is a method for manufacturing a high strength steel sheet, the method including a soaking step of heating the steel sheet satisfying the aforesaid component composition to a T1 temperature region, which is 800°C or higher and an $Ac_3$ point or lower, and holding the steel sheet in the T1 temperature region for 40 seconds or more for soaking; a first cooling step which is carried out after the soaking and in which, in cooling the steel sheet down to an arbitrary cooling stop temperature T2 satisfying 350°C or lower and 100°C or higher when an Ms point represented by the following formula (I) is 350°C or higher, or else, in cooling the steel sheet down to an arbitrary cooling stop temperature T2 satisfying the Ms point or lower and 100°C or higher when the Ms point represented by the following formula (I) is lower than 350°C, the steel sheet is cooled at an average cooling rate of 5°C/sec or more from 700°C down to a temperature which is the higher one of 300°C and the cooling stop temperature T2; a reheating step of reheating the steel sheet to a T3 temperature region exceeding 350°C and being 540°C or lower and holding the steel sheet for 50 seconds or more in the T3 temperature region; and a second cooling step which is carried out after the holding and in which the steel sheet is cooled at an average cooling rate of 10°C/sec or more from the T3 temperature region down to 300°C, and further the steel sheet is cooled at an average cooling rate exceeding 0°C/sec and being less than 10°C/sec from 300°C down to 150°C.

$$\text{Ms point (°C)} = 561 - 474 \times [C]/(1-Vf/100) - 33 \times [Mn] - 17 \times [Ni] - 17 \times [Cr] - 21 \times [Mo] \quad \cdots (I)$$

In the formula (I), Vf represents a polygonal ferrite fraction (area%) in a sample that is separately obtained by performing the aforesaid soaking step under the same conditions as in the manufacturing conditions for the aforesaid high strength steel sheet and thereafter cooling down to room temperature at the same average cooling rate as in the manufacturing conditions for the aforesaid high strength steel sheet in the aforementioned first cooling step. Also, in the formula (I), brackets [ ] represents a content (mass%) of each element, where calculation is made assuming that the content of elements not contained in the steel sheet is 0 mass%.

Also, in the method for manufacturing a high strength steel sheet, electrogalvanization may be carried out after the second cooling step.

Also, in the method for manufacturing a high strength steel sheet, hot-dip galvanization or hot-dip galvannealing may be carried out in the reheating step.

According to the present invention, the component composition and metal structure of the steel sheet are appropriately controlled, and in particular, the carbon concentration of retained γ is strictly controlled, so that a high strength steel sheet having a good elongation and hole expansion formability at room temperature and having a tensile strength of 980 MPa or more in which the molding load for forming at a hot temperature of 100 to 350°C is outstandingly reduced as compared with the molding load for forming at room temperature, as well as a manufacturing method therefor, can be provided.

Hereafter, the present invention will be explained more specifically by way of examples; however, the present invention is not limited by the following examples, and it goes without saying that the invention can be carried out while including additional modifications within a scope conforming to the gist disclosed heretofore and hereinafter, all such modifications being encompassed within the technical scope of the invention.

**Examples**

A steel material was produced by melting a steel containing the components shown in the following Table 1 with a balance being iron and inevitable impurities. The obtained steel material was heated and held at 1250°C for 30 minutes and thereafter hot-rolled with the rolling reduction being set to be about 90% and with the finish rolling end temperature being set to be 920°C. Thereafter, the steel sheet was cooled down from this temperature to a coiling temperature of 600°C at an average cooling rate of 30°C/sec, followed by coiling. After the coiling, the steel sheet was cooled to room temperature, so as to produce a hot-rolled steel sheet having a sheet thickness of 2.6 mm.

After the obtained hot-rolled steel sheet was pickled to remove surface scale, cold rolling was carried out at a cold rolling rate of 46% to produce a cold-rolled steel sheet having a sheet thickness of 1.4 mm.

The obtained cold-rolled steel sheet was subjected to continuous annealing to produce a test sample material. That is, the obtained cold-rolled steel sheet was heated to a soaking temperature T1 (°C) shown in the following Table 2-1 or 2-2 and held for a soaking time t1 (sec) shown in the following Table 2-1 or 2-2 for soaking. Thereafter, the resultant was cooled down to a cooling stop temperature T2 (°C) shown in the following Table 2-1 or 2-2. The average cooling rate CR1 (°C/sec) for cooling from 700°C down to the higher one of 300°C and the cooling stop temperature T2 is shown in the following Table 2-1 or 2-2.

Also, the following Table 2-1 and 2-2 show together the Ms point (°C) calculated on the basis of the component composition shown in the following Table 1 and the formula (I) shown above.

Subsequently, the steel sheet was heated from the cooling stop temperature T2 (°C) up to a reheating temperature T3 (°C) shown in the following Table 2-1 or 2-2 and held at this temperature for a holding time t3 (sec) shown in the following Table 2-1 or 2-2.

After the holding, the steel sheet was cooled to room temperature. During this, the steel sheet was cooled at an average cooling rate CR2 (°C/sec) shown in the following Table 2-1 or 2-2 from the reheating temperature T3 (°C) down to 300°C, and further the steel sheet was cooled at an average cooling rate CR3 (°C/sec) shown in the following Table 2-1 or 2-2 from 300°C down to 150°C.

Some of the test sample materials obtained by continuous annealing were subjected to the following plating treatment to produce an EG steel sheet, a GI steel sheet, and a GA steel sheet.

[Electrogalvanization (EG) treatment]

After the continuous annealing was carried out, the test sample material was cooled to room temperature. Subsequently, the test sample material was immersed into a galvanizing bath of 55°C to perform an electrogalvanization treatment at an electric current density of 30 to 50 A/dm$^2$, followed by washing with water and drying to produce an EG steel sheet. The adhesion amount of electrogalvanization was set to be 10 to 100 g/m$^2$ per one surface.

[Hot-dip galvanization (GI) treatment]

After the test sample material was heated from the cooling stop temperature T2 (°C) to the reheating temperature T3 (°C) shown in the following Table 2-1 or 2-2, the test sample material was immersed into a hot-dip galvanization bath having a temperature of 460°C to perform a plating treatment and thereafter cooled to room temperature to produce a GI steel sheet. The staying time in the T3 temperature region is shown in the section of the holding time t3 (sec) shown in the following Table 2-1 or 2-2. The adhesion amount of hot-dip galvanization was set to be 10 to 100 g/m$^2$ per one surface.

[Hot-dip galvannealing (GA) treatment]

After immersion into the above hot-dip galvanization bath, an alloying treatment was further carried out at a temperature shown in the following Table 2-1 or 2-2, followed by cooling down to room temperature to produce a GA steel sheet. The staying time in the T3 temperature region is shown in the section of the holding time t3 (sec) shown in the following Table 2-1 or 2-2. The adhesion amount of hot-dip galvannealing was set to be 10 to 100 g/m$^2$ per one surface.

The classification of the obtained test sample materials is shown in the following Table 2-1 or 2-2. In the Tables, the notations of cold-rolled, EG, GI, and GA represent a cold-rolled steel sheet, an EG steel sheet, a GI steel sheet, and a GA steel sheet, respectively.

With respect to the obtained test sample materials (which mean to include a cold-rolled steel sheet, an EG steel sheet, a GI steel sheet, and a GA steel sheet. The same applies hereinafter.), observation of the metal structure and evaluation of the mechanical properties were carried out by the following procedure.

«Observation of metal structure»

In the metal structure, the area ratio of each of polygonal ferrite, bainite, and tempered martensite was calculated on the basis of the result of observation by a scanning electron microscope. The volume ratio of retained $\gamma$ was calculated by X-ray diffractometry.

[Polygonal ferrite, bainite, and tempered martensite]

After the cross-section of the test sample material parallel to the rolling direction was polished, the test sample material was subjected to nital corrosion, followed by performing observation at the position of 1/4 of the sheet thickness in five fields of view at a magnification of 3000 times with a scanning electron microscope. The observation field of view was set to be about 40 $\mu$m × about 30 $\mu$m. The area ratio of polygonal ferrite can be measured by the observation with this scanning electron microscope. Also, the area ratios of bainite and tempered martensite were measured as follows. An average of an interval (average interval) of at least one kind selected from the group consisting of retained $\gamma$ and carbide, which are observed as being white or faint gray in the observation field of view, with each other was measured by the method described above, and classification into bainite and tempered martensite was made by the measured average interval, so as to measure the area ratios by the point counting method.

Results of the measurement are shown in the following Table 3-1 or 3-2. In the Table 3-1 or 3-2, F represents the area ratio of polygonal ferrite; B represents the area ratio of bainite; and TM represents the area ratio of tempered martensite. The balance is retained $\gamma$, an MA mixture phase in which fresh martensite and retained $\gamma$ are combined, pearlite, and fresh martensite.

[Retained y]

After the test sample material was ground down to a position of 1/4 of the sheet thickness, the ground surface was chemically polished, and thereafter the volume ratio of retained $\gamma$ relative to the metal structure overall was measured by X-ray diffractometry (ISIJ Int. Vol. 33, year of 1933, No. 7, p. 776).

Also, the carbon concentration in the retained $\gamma$ was measured by the procedure described above, so as to calculate the volume ratio of retained $\gamma$ with a carbon concentration of 1.0 mass% or less [$V\gamma_R(C \leq 1.0\%)$] and the volume ratio of retained $\gamma$ with a carbon concentration of 0.8 mass% or less [$V\gamma_R(C \leq 0.8\%)$] with respect to the metal structure overall.

Here, as reference data, the following Table 3-1 or 3-2 shows together the average value %$C_{avg}$ and the standard deviation $\sigma$%C of the carbon concentration distribution in the retained $\gamma$.

«Evaluation of mechanical properties»

[Tensile strength (TS) and elongation (EL) at room temperature]

The tensile strength (TS) and the elongation (EL) at room temperature (25°C) were measured by performing a tensile test in accordance with JIS Z2241. The test piece that was put to use was one obtained by cutting out a No. 5 test piece defined in JIS Z2201 from the test sample material so that the direction perpendicular to the rolling direction of the test sample material would be a longitudinal direction. The tensile speed of the tensile test was set to be 10 mm/min.

The results of TS and EL measured at room temperature are shown in the following Table 3-1 or 3-2.

Also, a product of TS and EL (TS × EL) measured at room temperature was calculated, and the results are shown in the following Table 3-1 or 3-2.

[$\Delta$TS]

In order to evaluate the degree of load reduction during the hot temperature molding, a value obtained by subtracting the tensile strength at a hot temperature (200°C) (hot temperature TS) from the tensile strength at room temperature (25°C) (room temperature TS) (room temperature TS - hot temperature TS = $\Delta$TS) was calculated. The tensile test was carried out under the same conditions as those described above except that the tensile speed was set to be 1000 mm/min in order to simulate the speed during the press-forming, and the tensile test was carried out at two levels of room temperature and 200°C. The calculated $\Delta$TS is shown in the following Table 3-1 or 3-2.

[Hole expansion formability]

The hole expansion formability was evaluated by the hole expansion ratio ($\lambda$) measured by performing a hole expansion test in accordance with JIS Z2256. The measurement results are shown in the "$\lambda$(%)" section of the following Table 3-1 or 3-2.

In the examples, the cases in which TS was 980 MPa or more were evaluated as having a high strength. Also, the cases in which TS $\times$ EL was 16000 MPa·% or more and $\lambda$ was 20% or more were evaluated as having an excellent formability at room temperature. Also, the cases in which $\Delta$TS was 150 MPa or more were evaluated as having a reduced molding load at a hot temperature. Further, the cases in which all of TS, TS $\times$ EL, $\lambda$, and $\Delta$TS satisfied the standard values were evaluated as being acceptable. On the other hand, the cases in which one or more of TS, TS $\times$ EL, $\lambda$, and $\Delta$TS did not satisfy the standard values were evaluated as being a reject.

The following observations arise from Tables 1, 2-1, 2-2, 3-1, and 3-2 given below.

Nos. 1, 7, 8, 10, 13, 15, 17, 20, 22, 23, 26 to 31, 33, 37, 38, 40, and 42 are examples satisfying the requirements defined in the present invention, where TS measured at room temperature was 980 MPa or higher, thereby providing a high strength. Also, TS $\times$ EL and $\lambda$ satisfied the acceptance standards of the present invention, thereby providing a good formability at room temperature. Further, since $\Delta$TS satisfied the acceptance standard of the present invention, the molding load at a hot temperature could be reduced.

In contrast, Nos. 2 to 6, 9, 11, 12, 14, 16, 18, 19, 21, 24, 25, 32, 34 to 36, 39, and 41 are examples that did not satisfy one or more of the requirements defined in the present invention, and at least one property among strength, formability at room temperature, and molding load reduction at a hot temperature was degraded.

Hereafter, description will be given in detail.

Nos. 2, 6, 12, and 41 are examples in which the average cooling rate CR3 from 300°C to 150°C after holding in the reheating step was too large, and retained $\gamma$ having a carbon concentration of 0.8 mass% or less was generated in a large amount, so that $\lambda$ was small, and the formability at room temperature could not be improved.

Nos. 3, 5, and 39 are examples in which the average cooling rate CR2 from the reheating temperature (holding temperature in the reheating step) to 300°C was too small, and the amount of retained $\gamma$ having a carbon concentration of 1.0 mass% or less could not be ensured, so that $\Delta$TS was small, and the molding load at a hot temperature could not be reduced. Here, No. 3 is an example simulating the above Patent Literature 1 and, as described in the paragraph [0128] of the above Patent Literature 1, the average cooling rate down to room temperature after holding was set to be 5°C/sec.

Nos. 4, 19, and 32 are examples in which the cooling stop temperature T2 after soaking was too high. In Nos. 4, 19, and 32, tempered martensite was not generated, or the generated amount was small, so that TS at room temperature was low, and the strength could not be ensured. Also, in Nos. 4, 19, and 32, retained $\gamma$ having a carbon concentration of 0.8 mass% or less was generated in a large amount, so that $\lambda$ was small, and the formability at room temperature could not be improved. Here, it seems that, in No. 19, the holding time t3 was comparatively long, and the amount of generated polygonal ferrite was comparatively small, so that bainite was generated in an excessive amount. In other words, the smaller the amount of generated polygonal ferrite is, the more difficult it is for C to be concentrated in the surrounding austenite, so that bainite transformation seems to occur rapidly.

No. 9 is an example in which the average cooling rate CR1 in the interval of from 700°C to 300°C after soaking was too small, so that polygonal ferrite was generated in an excessive amount. As a result, No. 9 could not ensure a desired TS.

No. 11 is an example in which the soaking temperature T1 was too high, so that little amount of polygonal ferrite was generated. As a result, in No. 11, TS $\times$ EL was low, and the formability at room temperature could not be improved.

No. 14 is an example in which the cooling stop temperature T2 after soaking was too low. In No. 14, bainite was not generated, and tempered martensite was generated in an excessive amount, so that the amount of retained $\gamma$ could not be ensured. As a result, in No. 14, TS $\times$ EL was low, and the formability at room temperature could not be improved. Also, in No. 14, the amount of retained $\gamma$ having a carbon concentration of 1.0 mass% or less could not be ensured, so that $\Delta$TS was small, and the molding load at a hot temperature could not be reduced.

No. 16 is an example in which the soaking temperature T1 was too low, and polygonal ferrite was generated in an excessive amount. As a result, a desired TS could not be ensured. Also, in No. 16, TS $\times$ EL lowered, and the formability at room temperature could not be improved. This seems to be because the formed structure introduced during the cold rolling remained.

No. 18 is an example in which the reheating temperature T3 was too high. In No. 18, little amount of bainite was generated, and the amount of generation of retained $\gamma$ could not be ensured, so that TS $\times$ EL lowered, and the formability at room temperature could not be improved. Also, in No. 18, retained $\gamma$ having a carbon concentration of 0.8 mass% or less was generated in an excessive amount, so that λ was small, and the formability at room temperature could not be improved.

No. 21 is an example in which the reheating temperature T3 was too low, and the amount of retained γ having a carbon concentration of 1.0 mass% or less could not be ensured. As a result, in No. 21, ΔTS was small, and the molding load at a hot temperature could not be reduced.

No. 24 is an example in which the soaking time t1 was too short, and a desired amount of retained γ could not be ensured. As a result, in No. 24, TS × EL lowered, and the formability at room temperature could not be improved.

No. 25 is an example in which the holding time t3 was too short. In No. 25, the amount of generation of bainite and retained γ could not be ensured, so that TS × EL lowered. Also, in No. 25, retained γ having a carbon concentration of 0.8 mass% or less was generated in an excessive amount, so that λ was small, and the formability at room temperature could not be improved.

Nos. 34 to 36 are examples in which the component composition did not satisfy the requirements defined in the present invention.

In No. 34, the Si amount was too small, so that TS lowered, and the strength could not be ensured. Also, in No. 34, the amount of generation of retained γ could not be ensured, so that TS × EL lowered, and the formability at room temperature could not be improved. Also, No. 34 is an example in which the amount of retained γ having a carbon concentration of 1.0 mass% or less could not be ensured, so that ΔTS was small, and the molding load at a hot temperature could not be reduced.

In No. 35, the C amount was too small, so that TS lowered, and the strength could not be ensured. Also, in No. 35, the amount of generation of retained γ could not be ensured, so that TS x EL lowered, and the formability at room temperature could not be improved. Also, No. 35 is an example in which the amount of retained γ having a carbon concentration of 1.0 mass% or less could not be ensured, so that ΔTS was small, and the molding load at a hot temperature could not be reduced.

In No. 36, the Mn amount was too small, so that polygonal ferrite was generated in an excessive amount; TS lowered; and the strength could not be ensured. Also, in No. 36, the amount of generation of retained γ could not be ensured, so that TS × EL lowered, and the formability at room temperature could not be improved. Also, No. 36 is an example in which the amount of retained γ having a carbon concentration of 1.0 mass% or less could not be ensured, so that ΔTS was small, and the molding load at a hot temperature could not be reduced.

[Table 1]

| Steel type | Components (mass%) | | | | | | | | | | | | | | | | | | | Ac$_3$ (°C) |
|---|---|---|---|---|---|---|---|---|---|---|---|---|---|---|---|---|---|---|---|---|
| | C | Si | Mn | P | S | Al | Cr | Mo | Ti | Nb | V | Cu | Ni | B | Ca | Mg | REM | N | |
| A | 0.19 | 1.85 | 2.20 | 0.02 | 0.001 | 0.04 | - | - | - | - | - | - | - | - | - | - | - | 0.004 | 868 |
| B | 0.21 | 1.85 | 2.10 | 0.01 | 0.002 | 0.03 | - | - | - | - | - | - | - | - | - | - | - | 0.004 | 856 |
| C | 0.17 | 1.75 | 2.40 | 0.01 | 0.002 | 0.04 | - | - | - | - | - | - | - | - | - | - | - | 0.005 | 856 |
| D | 0.22 | 1.35 | 2.10 | 0.01 | 0.004 | 0.05 | - | - | 0.04 | - | - | - | - | - | - | - | - | 0.004 | 855 |
| E | 0.17 | 1.35 | 2.20 | 0.01 | 0.002 | 0.03 | - | 0.2 | - | - | - | - | - | - | - | - | - | 0.004 | 846 |
| F | 0.22 | 1.85 | 1.73 | 0.01 | 0.002 | 0.04 | 0.2 | - | 0.09 | - | - | - | - | - | - | - | - | 0.004 | 902 |
| G | 0.22 | 1.85 | 2.20 | 0.02 | 0.001 | 0.04 | 0.2 | | 0.02 | - | - | - | - | 0.0025 | - | - | - | 0.005 | 867 |
| H | 0.18 | 2.00 | 2.65 | 0.02 | 0.003 | 0.04 | - | - | - | 0.02 | - | - | - | - | - | - | - | 0.004 | 864 |
| I | 0.42 | 1.53 | 1.76 | 0.03 | 0.001 | 0.05 | - | - | - | - | 0.09 | - | - | - | - | - | - | 0.005 | 844 |
| J | 0.12 | 1.80 | 2.80 | 0.01 | 0.002 | 0.02 | - | - | - | - | - | 0.3 | 0.2 | - | - | - | - | 0.002 | 842 |
| K | 0.22 | 1.80 | 1.80 | 0.01 | 0.002 | 0.04 | - | - | - | 0.10 | - | - | - | - | - | - | - | 0.003 | 864 |
| L | 0.18 | 1.50 | 2.42 | 0.01 | 0.001 | 0.04 | - | - | - | - | - | - | - | - | 0.0020 | - | - | 0.004 | 841 |
| M | 0.18 | 2.50 | 2.03 | 0.01 | 0.002 | 0.03 | - | - | - | - | - | - | - | - | - | 0.0026 | | 0.004 | 894 |
| N | 0.28 | 1.11 | 1.60 | 0.01 | 0.002 | 0.03 | - | - | - | - | - | - | - | - | - | - | 0.0021 | 0.004 | 823 |
| O | 0.16 | 1.90 | 2.87 | 0.01 | 0.003 | 0.03 | - | - | - | - | - | - | - | - | - | - | - | 0.003 | 847 |
| P | 0.18 | 0.52 | 2.05 | 0.02 | 0.002 | 0.03 | - | - | - | - | - | - | - | - | - | - | - | 0.004 | 812 |
| Q | 0.09 | 1.61 | 2.45 | 0.01 | 0.001 | 0.03 | - | - | - | - | - | - | - | - | - | - | - | 0.004 | 867 |
| R | 0.18 | 1.60 | 1.30 | 0.01 | 0.001 | 0.03 | - | - | - | - | - | - | - | - | - | - | - | 0.003 | 875 |
| s | 0.22 | 1.85 | 2.00 | 0.01 | 0.001 | 0.04 | - | - | - | - | - | - | - | - | - | - | - | 0.004 | 860 |
| T | 0.22 | 1.85 | 1.90 | 0.01 | 0.001 | 0.04 | - | - | 0.06 | - | - | - | - | - | - | - | - | 0.004 | 887 |

[Table 2-1]

| No. | Steel type | Soaking temperature T1 (℃) | Soaking time t1 (sec) | Average cooling rate CR1 (℃/sec) | Ms (℃) | Cooling stop temperature T2 (℃) | Reheating temperature T3 (℃) | Holding time t3 (sec) | Average cooling rate CR2 (℃/sec) | Average cooling rate CR3 (℃/sec) | Alloying temperature (℃) | Classification |
|---|---|---|---|---|---|---|---|---|---|---|---|---|
| 1 | A | 830 | 80 | 20 | 322 | 170 | 400 | 350 | 30 | 5 | - | Cold-rolled |
| 2 | A | 830 | 80 | 20 | 325 | 170 | 400 | 350 | 20 | 20 | - | Cold-rolled |
| 3 | A | 830 | 80 | 20 | 336 | 170 | 400 | 350 | 5 | 5 | - | Cold-rolled |
| 4 | A | 810 | 150 | 15 | 315 | 380 | 380 | 580 | 20 | 8 | 530 | GA |
| 5 | A | 850 | 80 | 8 | 352 | 200 | 420 | 150 | 8 | 3 | 450 | GA |
| 6 | A | 850 | 80 | 8 | 343 | 200 | 420 | 150 | 25 | 13 | 450 | GA |
| 7 | B | 810 | 240 | 20 | 323 | 180 | 420 | 720 | 20 | 8 | - | Cold-rolled |
| 8 | B | 850 | 100 | 15 | 361 | 280 | 350 | 300 | 30 | 5 | - | Cold-rolled |
| 9 | B | 810 | 100 | 3 | 249 | 150 | 420 | 720 | 20 | 8 | - | Cold-rolled |
| 10 | C | 830 | 200 | 5 | 338 | 200 | 420 | 300 | 10 | 2 | - | Cold-rolled |
| 11 | C | 900 | 100 | 40 | 400 | 330 | 410 | 80 | 15 | 5 | - | Cold- rolled |
| 12 | C | 800 | 150 | 45 | 348 | 200 | 400 | 300 | 15 | 15 | - | Cold-rolled |
| 13 | D | 840 | 100 | 10 | 369 | 120 | 400 | 130 | 12 | 2 | 540 | GA |
| 14 | D | 840 | 100 | 10 | 366 | 80 | 400 | 130 | 12 | 2 | 450 | GA |
| 15 | E | 810 | 60 | 40 | 354 | 120 | 370 | 300 | 15 | 5 | - | Cold-rolled |
| 16 | E | 780 | 150 | 10 | 240 | 150 | 450 | 300 | 15 | 5 | - | Cold-rolled |
| 17 | F | 840 | 80 | 15 | 300 | 100 | 450 | 65 | 17 | 3 | 480 | GA |
| 18 | F | 860 | 80 | 40 | 343 | 170 | 560 | 65 | 17 | 3 | - | GI |
| 19 | F | 890 | 80 | 40 | 369 | 400 | 400 | 900 | 15 | 5 | 450 | GA |
| 20 | G | 830 | 80 | 30 | 317 | 110 | 430 | 70 | 15 | 5 | 470 | GA |

EP 3 412 786 B1

20

[Table 2-2]

| No. | Steel type | Soaking temperature T1 (°C) | Soaking time t1 (sec) | Average cooling rate CR1 (°C/sec) | Ms (°C) | Cooling stop temperature T2 (°C) | Reheating temperature T3 (°C) | Holding time t3 (sec) | Average cooling rate CR2 (°C/sec) | Average cooling rate CR3 (°C/sec) | Alloying temperature (°C) | Classification |
|---|---|---|---|---|---|---|---|---|---|---|---|---|
| 21 | G | 830 | 80 | 30 | 308 | 110 | 300 | 70 | 15 | 5 | 470 | GA |
| 22 | G | 830 | 520 | 30 | 311 | 110 | 430 | 70 | 15 | 5 | 470 | GA |
| 23 | H | 830 | 150 | 20 | 348 | 150 | 430 | 300 | 25 | 1 | - | GI |
| 24 | H | 830 | 30 | 20 | 344 | 150 | 430 | 250 | 25 | 1 | - | GI |
| 25 | H | 830 | 150 | 20 | 355 | 150 | 430 | 40 | 25 | 1 | - | Cold-rolled |
| 26 | I | 810 | 360 | 8 | 223 | 150 | 370 | 500 | 12 | 2 | 440 | GA |
| 27 | J | 825 | 200 | 30 | 370 | 220 | 370 | 50 | 10 | 5 | - | Cold-rolled |
| 28 | K | 830 | 50 | 40 | 308 | 100 | 400 | 70 | 17 | 3 | 450 | GA |
| 29 | L | 810 | 80 | 30 | 352 | 180 | 450 | 80 | 15 | 5 | 470 | GA |
| 30 | M | 860 | 80 | 30 | 333 | 180 | 450 | 80 | 15 | 5 | 470 | GA |
| 31 | N | 815 | 60 | 8 | 316 | 300 | 420 | 300 | 15 | 5 | - | EG |
| 32 | N | 800 | 45 | 5 | 253 | 350 | 450 | 1000 | 15 | 5 | 500 | GA |
| 33 | O | 810 | 60 | 30 | 344 | 250 | 420 | 300 | 15 | 5 | - | EG |
| 34 | P | 800 | 150 | 30 | 384 | 200 | 440 | 150 | 15 | 5 | - | Cold-rolled |
| 35 | Q | 840 | 150 | 30 | 401 | 200 | 440 | 150 | 15 | 5 | - | Cold-rolled |
| 36 | R | 860 | 150 | 30 | 281 | 150 | 440 | 150 | 15 | 5 | - | Cold-rolled |
| 37 | S | 820 | 60 | 20 | 305 | 120 | 450 | 65 | 20 | 2 | 500 | GA |
| 38 | S | 820 | 60 | 20 | 305 | 120 | 450 | 65 | 12 | 2 | 500 | GA |
| 39 | S | 820 | 60 | 20 | 305 | 120 | 450 | 65 | 6 | 2 | 500 | GA |
| 40 | S | 820 | 60 | 20 | 305 | 120 | 450 | 65 | 24 | 8 | 500 | GA |
| 41 | S | 820 | 60 | 20 | 305 | 120 | 450 | 65 | 24 | 15 | 500 | GA |
| 42 | T | 830 | 60 | 20 | 327 | 120 | 450 | 65 | 25 | 4 | 500 | GA |

[Table 3-1]

| No. | Metal structure (area%) | | | | Metal structure (volume%) | | | % $C_{avg}$ (mass%) | $\sigma$%C (mass%) | Material characteristics | | | | |
|---|---|---|---|---|---|---|---|---|---|---|---|---|---|---|
| | F | B | TM | Balance | V$\gamma_R$ | Y$\gamma_R$ (C ≤ 1.0%) | V$\gamma_R$ (C ≤ 0.8%) | | | TS (MPa) | EL (%) | TS × EL (MPa %) | $\lambda$ (%) | $\Delta$TS (MPa) |
| 1 | 46 | 20 | 22 | 12 | 14.0 | 6.1 | 2.1 | 1.04 | 0.23 | 1078 | 19 | 20482 | 32 | 202 |
| 2 | 45 | 17 | 26 | 12 | 13.8 | 5.9 | 2.6 | 1.05 | 0.29 | 1075 | 19 | 20425 | 17 | 213 |
| 3 | 41 | 16 | 32 | 11 | 12.1 | 3.2 | 1.7 | 1.28 | 0.45 | 1076 | 18 | 19368 | 34 | 128 |
| 4 | 48 | 34 | 0 | 18 | 11.6 | 4.9 | 2.5 | 1.07 | 0.34 | 924 | 20 | 18480 | 18 | 192 |
| 5 | 34 | 27 | 25 | 14 | 15.2 | 3.4 | 2.0 | 1.42 | 0.56 | 1062 | 19 | 20178 | 27 | 141 |
| 6 | 38 | 20 | 31 | 11 | 13.0 | 4.0 | 2.5 | 1.27 | 0.54 | 1058 | 20 | 21160 | 15 | 162 |
| 7 | 41 | 26 | 23 | 10 | 14.7 | 6.3 | 1.9 | 1.04 | 0.21 | 1081 | 22 | 23782 | 30 | 194 |
| 8 | 24 | 46 | 20 | 10 | 13.2 | 4.1 | 1.8 | 1.16 | 0.33 | 1092 | 17 | 18564 | 38 | 158 |
| 9 | 59 | 18 | 12 | 11 | 13.2 | 4.5 | 2.0 | 1.13 | 0.32 | 952 | 21 | 19992 | 23 | 198 |
| 10 | 44 | 22 | 21 | 13 | 11.8 | 5.6 | 2.3 | 1.02 | 0.25 | 1042 | 18 | 18756 | 26 | 166 |
| 11 | 2 | 47 | 28 | 23 | 8.4 | 6.2 | 2.3 | 0.90 | 0.16 | 1198 | 11 | 13178 | 60 | 250 |
| 12 | 40 | 26 | 18 | 16 | 15.4 | 6.4 | 2.9 | 1.06 | 0.30 | 1187 | 19 | 22553 | 16 | 202 |
| 13 | 15 | 10 | 72 | 3 | 8.0 | 5.0 | 1.5 | 0.95 | 0.17 | 1190 | 14 | 16660 | 38 | 180 |
| 14 | 17 | 0 | 82 | 1 | 3.6 | 1.4 | 0.6 | 1.08 | 0.29 | 1233 | 8 | 9864 | 49 | 98 |
| 15 | 38 | 10 | 42 | 10 | 12.5 | 5.8 | 2.3 | 1.02 | 0.25 | 1052 | 18 | 18936 | 22 | 184 |
| 16 | 67 | 10 | 10 | 13 | 6.8 | 3.5 | 2.0 | 0.99 | 0.35 | 881 | 17 | 14977 | 25 | 168 |
| 17 | 48 | 12 | 31 | 9 | 16.8 | 5.7 | 2.2 | 1.12 | 0.28 | 1038 | 24 | 24912 | 27 | 203 |
| 18 | 34 | 9 | 34 | 23 | 4.8 | 3.6 | 2.7 | 0.74 | 0.39 | 1067 | 11 | 11737 | 12 | 151 |
| 19 | 21 | 54 | 8 | 17 | 12.0 | 6.2 | 2.8 | 0.99 | 0.26 | 970 | 18 | 17460 | 16 | 226 |
| 20 | 38 | 13 | 41 | 8 | 16.8 | 6.4 | 2.1 | 1.07 | 0.24 | 1146 | 21 | 24066 | 35 | 208 |

[Table 3-2]

| No. | Metal structure (area%) | | | | Metal structure (volume%) | | | % C$_{avg}$ (mass%) | σ%C (mass%) | Material characteristics | | | | |
|---|---|---|---|---|---|---|---|---|---|---|---|---|---|---|
| | F | B | TM | Balance | Vγ$_R$ | Vγ$_R$ (C ≤ 1.0%) | Vγ$_R$ (C ≤ 0.8%) | | | TS (MPa) | EL (%) | TS × EL (MPa %) | λ (%) | ΔTS (MPa) |
| 21 | 41 | 10 | 39 | 10 | 13.8 | 2.8 | 1.0 | 1.27 | 0.32 | 1184 | 17 | 20128 | 39 | 98 |
| 22 | 40 | 12 | 40 | 8 | 15.5 | 5.8 | 2.1 | 1.08 | 0.26 | 1138 | 17 | 19346 | 22 | 200 |
| 23 | 32 | 15 | 42 | 11 | 7.8 | 6.2 | 2.3 | 0.88 | 0.15 | 1224 | 14 | 17136 | 30 | 211 |
| 24 | 34 | 11 | 46 | 9 | 4.7 | 3.8 | 2.3 | 0.81 | 0.22 | 1220 | 11 | 13420 | 28 | 154 |
| 25 | 28 | 7 | 42 | 23 | 4.5 | 4.0 | 3.1 | 0.66 | 0.27 | 1251 | 8 | 10008 | 11 | 161 |
| 26 | 29 | 29 | 21 | 21 | 19.0 | 3.9 | 1.4 | 1.26 | 0.32 | 1399 | 15 | 20985 | 23 | 168 |
| 27 | 40 | 34 | 21 | 5 | 5.8 | 3.7 | 2.2 | 0.89 | 0.30 | 984 | 17 | 16728 | 42 | 195 |
| 28 | 46 | 11 | 32 | 11 | 17.6 | 6.0 | 2.1 | 1.11 | 0.26 | 1000 | 24 | 24000 | 25 | 213 |
| 29 | 34 | 25 | 28 | 13 | 12.2 | 6.8 | 2.3 | 0.97 | 0.19 | 1083 | 18 | 19494 | 38 | 197 |
| 30 | 47 | 19 | 30 | 4 | 17.0 | 3.6 | 0.9 | 1.20 | 0.24 | 1052 | 24 | 25248 | 47 | 175 |
| 31 | 31 | 38 | 16 | 15 | 12.5 | 5.1 | 2.3 | 1.07 | 0.30 | 1123 | 17 | 19091 | 20 | 226 |
| 32 | 48 | 30 | 6 | 16 | 16.0 | 5.5 | 2.7 | 1.14 | 0.36 | 931 | 24 | 22344 | 18 | 202 |
| 33 | 38 | 34 | 24 | 4 | 9.7 | 3.8 | 1.2 | 1.06 | 0.23 | 1181 | 18 | 21258 | 59 | 189 |
| 34 | 22 | 31 | 43 | 4 | 4.0 | 2.8 | 1.7 | 0.85 | 0.28 | 975 | 13 | 12675 | 42 | 113 |
| 35 | 46 | 16 | 35 | 3 | 3.2 | 2.1 | 0.8 | 0.93 | 0.19 | 921 | 16 | 14736 | 39 | 108 |
| 36 | 64 | 11 | 15 | 10 | 3.8 | 2.6 | 1.1 | 0.91 | 0.19 | 784 | 18 | 14112 | 52 | 111 |
| 37 | 45 | 10 | 30 | 15 | 17.1 | 6.8 | 1.6 | 1.05 | 0.19 | 1034 | 25 | 25850 | 32 | 210 |
| 38 | 45 | 15 | 30 | 10 | 14.5 | 4.5 | 0.8 | 1.09 | 0.18 | 1025 | 24 | 24600 | 33 | 176 |
| 39 | 45 | 18 | 30 | 7 | 13.6 | 3.3 | 0.4 | 1.12 | 0.17 | 1023 | 23 | 23529 | 33 | 145 |
| 40 | 45 | 10 | 28 | 17 | 15.1 | 7.0 | 2.2 | 1.02 | 0.21 | 1042 | 24 | 25008 | 25 | 227 |
| 41 | 45 | 10 | 30 | 15 | 14.2 | 7.6 | 2.9 | 0.98 | 0.22 | 1045 | 23 | 24035 | 17 | 232 |
| 42 | 39 | 10 | 34 | 17 | 17.5 | 5.7 | 1.3 | 1.09 | 0.20 | 1023 | 24 | 24552 | 33 | 198 |

This application is based on Japanese Patent Application No. 2016-038304 filed on February 29, 2016 and Japanese Patent Application No. 2016-182966 filed on September 20, 2016.

While the present invention has been fully and appropriately described in the above with reference to the drawings by way of embodiments in order to express the present invention, it is to be recognized that those skilled in the art can readily change and/or modify the embodiments described above. Therefore, it is to be interpreted that the changes or modifications made by those skilled in the art are encompassed within the scope of the claims unless those changes or modifications are at a level that departs from the scope of the claims described in the claims section of the present application.

## Industrial Applicability

According to the present invention, the component composition and metal structure of the steel sheet are appropriately controlled, and in particular, the carbon concentration of retained $\gamma$ is strictly controlled, so that a high strength steel sheet having a good elongation and hole expansion formability at room temperature and having a tensile strength of 980 MPa or more in which the molding load for forming at a hot temperature of 100 to 350°C is outstandingly reduced as compared with the molding load for forming at room temperature, as well as a manufacturing method therefor, are provided.

## Claims

**1.** A high strength steel sheet satisfying, in mass%:

C: 0.10% to 0.5%,
Si: 1.0% to 3%,
Mn: 1.5% to 3%,
P: more than 0% and 0.1% or less,
S: more than 0% and 0.05% or less,
Al: 0.005% to 1 %, and
N: more than 0% and 0.01% or less, and optionally
one or more selected from the group consisting of, in mass%:

Cr: more than 0% and 1% or less,
Mo: more than 0% and 1% or less,
Ti: more than 0% and 0.15% or less,
Nb: more than 0% and 0.15% or less,
V: more than 0% and 0.15% or less,
Cu: more than 0% and 1% or less,
Ni: more than 0% and 1 % or less,
B: more than 0% and 0.005% or less,
Ca: more than 0% and 0.01% or less,
Mg: more than 0% and 0.01% or less, and
a rare earth element: more than 0% and 0.01% or less,

with a balance being iron and inevitable impurities, wherein

(1) a metal structure of the steel sheet comprises polygonal ferrite, bainite, tempered martensite, retained austenite, and balance structures;
(2) when the metal structure is observed with a scanning electron microscope, the metal structure satisfies:

polygonal ferrite: 10 to 50 area%,
bainite: 10 to 50 area%,
tempered martensite: 10 to 80 area%, and
balance structures: 25 area% or less

with respect to the metal structure overall; and
(3) when the metal structure is measured by X-ray diffractometry, the metal structure satisfies:

**retained austenite:** 5.0 volume% or more,
retained austenite with a carbon concentration of 1.0 mass% or less: 3.5 volume% or more, and
retained austenite with a carbon concentration of 0.8 mass% or less: 2.4 volume% or less, with respect to
the metal structure overall,

wherein the volume ratio of retained austenite, the volume ratio of retained austenite with a carbon concentration
of 1.0 mass% or more, and the volume ratio of retained austenite with a carbon concentration of 0.8 mass% or less
are measured with the method described in the description.

2. The high strength steel sheet according to claim 1, having an electrogalvanized layer, a hot-dip galvanized layer,
or a hot-dip galvannealed layer on a surface of the steel sheet.

3. A method for manufacturing a high strength steel sheet according to claim **1,** the method comprising:

a soaking step of heating the steel sheet satisfying the aforesaid component composition to a T1 temperature
region, which is 800°C or higher and an $Ac_3$ point or lower, and holding the steel sheet in the T1 temperature
region for 40 seconds or more for soaking;
a first cooling step which is carried out after the soaking and in which,
in cooling the steel sheet down to an arbitrary cooling stop temperature T2 satisfying 350°C or lower and 100°C
or higher when an Ms point represented by the following formula (I) is 350°C or higher, or else,
in cooling the steel sheet down to an arbitrary cooling stop temperature T2 satisfying the Ms point or lower and
100°C or higher when the Ms point represented by the following formula (I) is lower than 350°C,
the steel sheet is cooled at an average cooling rate of 5°C/sec or more from 700°C down to a temperature which
is the higher one of 300°C and the cooling stop temperature T2;
a reheating step of reheating the steel sheet to a T3 temperature region exceeding 350°C and being 540°C or
lower and holding the steel sheet for 50 seconds or more in the T3 temperature region;
and
a second cooling step which is carried out after the holding and in which the steel sheet is cooled at an average
cooling rate of 10°C/sec or more from the T3 temperature region down to 300°C, and further the steel sheet is
cooled at an average cooling rate exceeding 0°C/sec and being less than 10°C/sec from 300°C down to 150°C,
the Ms point satisfying:

$$\text{Ms point (°C)} = 561 - 474 \times [\text{C}]/(1-\text{Vf}/100) - 33 \times [\text{Mn}] - 17 \times [\text{Ni}] - 17 \times [\text{Cr}] - 21 \times [\text{Mo}]$$

$\cdots\text{(I)}$

where, in the formula (I), Vf represents area% of a polygonal ferrite fraction in a sample that is separately
obtained by performing the aforesaid soaking step under the same conditions as in the manufacturing conditions
for the aforesaid high strength steel sheet and thereafter cooling down to room temperature at the same average
cooling rate as in the manufacturing conditions for the aforesaid high strength steel sheet in the aforementioned
first cooling step, and
in the formula (I), brackets [ ] represents mass% of a content of each element, where calculation is made
assuming that the content of elements not contained in the steel sheet is 0 mass%.

4. The method for manufacturing a high strength steel sheet according to claim 3, wherein electrogalvanization is
carried out after the second cooling step.

5. The method for manufacturing a high strength steel sheet according to claim 3, wherein hot-dip galvanization or
hot-dip galvannealing is carried out in the reheating step.

**Patentansprüche**

1. Hochfestes Stahlblech, das, in Massen-%:

C: 0,10 % bis 0,5 %,
Si: 1,0 % bis 3 %,
Mn: 1,5 % bis 3 %,

P: mehr als 0 % und 0,1 % oder weniger,

S: mehr als 0 % und 0,05 % oder weniger,

Al : 0,005 % bis 1 %, und

N: mehr als 0 % und 0,01 % oder weniger, und gegebenenfalls eines oder mehrere, ausgewählt aus der Gruppe, bestehend aus, in Massen-%:

Cr: mehr als 0 % und 1 % oder weniger,

Mo: mehr als 0 % und 1 % oder weniger,

Ti: mehr als 0 % und 0,15 % oder weniger,

Nb: mehr als 0 % und 0,15 % oder weniger,

V: mehr als 0 % und 0,15 % oder weniger,

Cu: mehr als 0 % und 1 % oder weniger,

Ni: mehr als 0 % und 1 % oder weniger,

B: mehr als 0 % und 0,005 % oder weniger,

Ca: mehr als 0 % und 0,01 % oder weniger,

Mg: mehr als 0 % und 0,01 % oder weniger, und

ein Seltenerdelement: mehr als 0 % und 0,01 % oder weniger erfüllt,

wobei es sich bei dem Rest um Eisen und unvermeidbare Verunreinigungen handelt, wobei

(1) eine Metallstruktur des Stahlblechs polygonalen Ferrit, Bainit, angelassenen Martensit, Restaustenit und Reststrukturen umfasst;

(2) wenn die Metallstruktur mit einem Rasterelektronenmikroskop untersucht wird, die Metallstruktur erfüllt:

polygonaler Ferrit: 10 bis 50 Flächen-%,

Bainit: 10 bis 50 Flächen-%, und

angelassener Martensit: 10 bis 80 Flächen-%, und

Reststrukturen: 25 Flächen-% oder weniger,

bezogen auf die gesamte Metallstruktur; und

(3) wenn die Metallstruktur mittels Röntgenbeugung gemessen wird, die Metallstruktur erfüllt:

Restaustenit: 5,0 Volumen-% oder mehr,

Restaustenit mit einer Kohlenstoffkonzentration von 1,0 Massen-% oder weniger: 3,5 Volumen-% oder mehr, und

Restaustenit mit einer Kohlenstoffkonzentration von 0,8 Massen-% oder weniger: 2,4 Volumen-% oder weniger, bezogen auf die gesamte Metallstruktur,

wobei der Volumenanteil von Restaustenit, der Volumenanteil von Restaustenit mit einer Kohlenstoffkonzentration von 1,0 Massen-% oder mehr und der Volumenanteil von Restaustenit mit einer Kohlenstoffkonzentration von 0,8 Massen-% oder weniger mit dem in der Beschreibung beschriebenen Verfahren gemessen werden.

2. Hochfestes Stahlblech nach Anspruch 1, das eine galvanische Verzinkungsschicht, eine Feuerverzinkungsschicht oder eine Feuerverzinkungs- und Erwärmungsschicht auf einer Oberfläche des Stahlblechs aufweist.

3. Verfahren zur Herstellung eines hochfesten Stahlblechs nach Anspruch 1, wobei das Verfahren umfasst:

einen Halteschritt des Erwärmens des Stahlblechs, das die vorstehend genannte Komponentenzusammensetzung erfüllt, auf einen T1-Temperaturbereich, der 800 °C oder höher und ein $Ac_3$-Punkt oder niedriger ist, und des Haltens des Stahlblechs in dem T1-Temperaturbereich für 40 Sekunden oder mehr zum Halten;

einen ersten Abkühlungsschritt, der nach dem Halten durchgeführt wird und in dem,

beim Abkühlen des Stahlblechs hinab auf eine beliebige Abkühlungsstopptemperatur T2, die 350 °C oder niedriger und 100 °C oder höher erfüllt, wenn ein Ms-Punkt, der durch die folgende Formel (I) dargestellt ist, 350 °C oder höher ist, oder ansonsten

beim Abkühlen des Stahlblechs hinab auf eine beliebige Abkühlungsstopptemperatur T2, die den Ms-Punkt oder niedriger und 100 °C oder höher erfüllt, wenn der Ms-Punkt, der durch die folgende Formel (I) dargestellt ist, niedriger als 350 °C ist,

das Stahlblech bei einer durchschnittlichen Abkühlungsrate von 5 °C/s oder mehr von 700 °C hinab auf eine Temperatur abgekühlt wird, welche die höhere von 300 °C und der Abkühlungsstopptemperatur T2 ist; einen Wiedererwärmungsschritt des Wiedererwärmens des Stahlblechs auf einen T3-Temperaturbereich, der 350 °C übersteigt und 540 °C oder niedriger ist, und des Haltens des Stahlblechs für 50 Sekunden oder mehr in dem T3-Temperaturbereich; und

einen zweiten Abkühlungsschritt, der nach dem Halten durchgeführt wird und in dem das Stahlblech bei einer durchschnittlichen Abkühlungsrate von 10 °C/s oder mehr von dem T3-Temperaturbereich hinab auf 300 °C abgekühlt wird, und ferner das Stahlblech bei einer durchschnittlichen Abkühlungsrate von mehr als 0 °C/s und weniger als 10 °C/s von 300 °C hinab auf 150 °C abgekühlt wird,

wobei der Ms-Punkt erfüllt:

$$\text{Ms-Punkt (°C)} = 561 - 474 \times [C]/(1-Vf/100) - 33 \times [Mn] - 17 \times [Ni] - 17 \times [Cr] - 21 \times [Mo] \quad \cdots (I)$$

wobei in der Formel (I) Vf die Flächen-% eines polygonalen Ferritanteils in einer Probe darstellt, die durch Durchführen des vorstehend genannten Halteschritts bei den gleichen Bedingungen wie den Herstellungsbedingungen für das vorstehend genannte hochfeste Stahlblech und danach Abkühlen auf Raumtemperatur bei der gleichen durchschnittlichen Abkühlungsrate wie den Herstellungsbedingungen für das vorstehend genannte hochfeste Stahlblech in dem vorstehend genannten ersten Abkühlungsschritt separat erhalten wird, und wobei in der Formel (I) Klammern [ ] die Massen-% eines Gehalts jedes Elements darstellen, wobei eine Berechnung unter der Annahme durchgeführt wird, dass der Gehalt von Elementen, die nicht in dem Stahlblech enthalten sind, 0 Massen-% beträgt.

4. Verfahren zur Herstellung eines hochfesten Stahlblechs nach Anspruch 3, wobei das galvanische Verzinken nach dem zweiten Abkühlungsschritt durchgeführt wird.

5. Verfahren zur Herstellung eines hochfesten Stahlblechs nach Anspruch 3, wobei das Feuerverzinken oder das Feuerverzinken und Erwärmen in dem Wiedererwärmungsschritt durchgeführt wird oder werden.

**Revendications**

1. Tôle d'acier à haute résistance satisfaisant, en % en masse à :

C: de 0,10% à 0,5%,
Si: de 1,0 % à 3%,
Mn: de 1,5% à 3%,
P: plus de 0% et 0,1% ou moins;
S: plus de 0% et 0,05% ou moins;
Al : de 0,005% à 1%, et
N: plus de 0% et 0,01% ou moins; et optionnellement
un ou plusieurs éléments sélectionnés parmi le groupe consistant, en % en masse, en :

du Cr : plus de 0% et 1 % ou moins;
du Mo : plus de 0% et 1 % ou moins;
du Ti: plus de 0% et 0,15% ou moins;
du Nb : plus de 0% et 0,15% ou moins;
du V: plus de 0% et 0,15% ou moins;
du Cu : plus de 0% et 1 % ou moins;
du Ni : plus de 0% et 1 % ou moins;
du B: plus de 0% et 0,005% ou moins;
du Ca : plus de 0% et 0,01 % ou moins;
du Mg: plus de 0% et 0,01% ou moins, et
un élément des terres rares : plus de 0% et 0,01 % ou moins;

le reste étant du fer et d'inévitables impuretés, dans laquelle
(1) une structure métallique de la tôle d'acier comprend de la ferrite polygonale, de la bainite, de la martensite trempée, de l'austénite de trempe et des structures d'équilibre ;
(2) quand la structure métallique est observée à l'aide d'un microscope à balayage électronique, la structure métallique satisfait à :

de la ferrite polygonale : de 10 à 50% de surface,
de la bainite : de 10 à 50% de surface,
de la martensite trempée : de 10% à 80% de surface, et
des structures d'équilibre : 25% de surface ou moins
sur base de la totalité de la structure métallique ; et

(3) quand la structure métallique est mesurée par diffractométrie aux rayons X, la structure métallique satisfait à :

austénite de trempe: 5,0% en volume ou plus,
austénite de trempe avec une concentration en carbone de 1,0% en masse ou
moins : 3,5% en volume ou plus, et
austénite de trempe avec une concentration en carbone de 0,8% en masse ou
moins : 2,4% en volume ou moins,
sur base de la totalité de la structure métallique,
dans laquelle le rapport volumique d'austénite de trempe, le rapport volumique d'austénite de trempe avec une concentration en carbone de 1,0% en masse ou
plus, et le rapport volumique d'austénite de trempe avec une concentration en carbone de 0,8% en masse ou moins sont mesurés à l'aide de la méthode décrite dans la description.

2. Tôle d'acier à haute résistance selon la revendication 1, comprenant une couche électrogalvanisée, une couche galvanisée à chaud ou une couche recuite par galvanisation à chaud à la surface de la tôle d'acier.

3. Procédé de fabrication d'une tôle d'acier à haute résistance selon la revendication 1, le procédé comprenant les étapes suivantes :

une étape de maintien à température où l'on chauffe la tôle d'acier satisfaisant à la composition des composants susmentionnés à une plage de température T1,
laquelle est de 800°C ou supérieure et un point Ac$_3$ ou moins, et on maintient la tôle d'acier dans la plage de température T1 pendant 40 secondes ou plus pour le maintien à température ;
une première étape de refroidissement qui est exécutée après le maintien à température et dans laquelle,
lors du refroidissement de la tôle d'acier à une température d'arrêt du refroidissement arbitraire T2 satisfaisant à 350°C ou inférieure et à 100°C ou supérieur quand un point Ms représenté par la formule suivante (I) est 350°C ou plus, ou autrement lors du refroidissement de la tôle d'acier à une température d'arrêt du refroidissement arbitraire T2 satisfaisant au point Ms ou inférieur et à 100°C ou supérieur quand le point Ms représenté par la formule suivante (I) est inférieur à 350°C,
la tôle d'acier est refroidie à une vitesse moyenne de refroidissement de 5°C/s ou plus partant de 700°C jusqu'à une température qui est la plus élevée de 300°C et de la température d'arrêt du refroidissement T2 ;
une étape de réchauffage où l'on réchauffe la tôle d'acier à une plage de température T3 dépassant 350°C, et étant de 540°C ou moins et on maintient la tôle d'acier pendant 50 secondes ou plus à la plage de température T3 ; et
une deuxième étape de refroidissement exécutée après la maintien et dans laquelle la tôle d'acier est refroidie à une vitesse moyenne de refroidissement de 10°C/s ou plus partant de la plage de température T3 jusqu'à 300°C, et de plus la tôle d'acier est refroidie à une vitesse moyenne de refroidissement dépassant 0°C/s, et qui est moins de 10°C/s partant de 300°C jusqu'à 150°C,
le point Ms satisfaisant à :

$$\text{point Ms (°C)} = 561 - 474 \times [C]/(1 - Vf/100) - 33 \times [Mn] - 17 \times [Ni] - 17 \times [Cr] - 21 \times [Mo]$$

$$(I)$$

où, dans la formule (I), Vf représente le % de surface d'une fraction de ferrite polygonale dans un échantillon qu'on obtient séparément en réalisant ladite étape susmentionnée de maintien à température dans les mêmes conditions que dans les conditions de fabrication pour la tôle d'acier à haute résistance susmentionnée et ensuite on refroidit à la température ambiante à la même vitesse moyenne de refroidissement que dans les conditions de fabrication pour la tôle d'acier à haute résistance susmentionnée dans la première étape de refroidissement susmentionnée, et

dans la formule (I) les crochets [ ] représentent les % en masse d'une teneur de chaque élément, où l'on effectue le calcul en supposant que la teneur en les éléments non contenus dans la tôle d'acier est 0% en masse.

4. Procédé de fabrication d'une tôle d'acier à haute résistance selon la revendication 3, dans lequel une électrogalvanisation est réalisée après la deuxième étape de refroidissement.

5. Procédé de fabrication d'une tôle d'acier à haute résistance selon la revendication 3, dans lequel une galvanisation à chaud ou un recuit par galvanisation à chaud est réalisée à l'étape de réchauffage.

# FIG. 1

DIFFRACTION
INTENSITY

$\Delta 2\theta$ (hkl)

$2\theta$ (deg)

$2\theta_L$(hkl)

$2\theta_{avg}$(hkl)

$2\theta_H$(hkl)

EP 3 412 786 B1

FIG. 2

31

FIG. 3A

FIG. 3B

21

22

23

24

FIG. 4

---

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5728115 B
- JP 2003113442 A
- JP 2013181184 A
- EP 2873746 A1
- JP 2016038304 A
- JP 2016182966 A

**Non-patent literature cited in the description**

- *ISIJ Int.,* 1933, vol. 33 (7), 776
- **WILLIAM C. LESLIE.** The Physical Metallurgy of Steels. Maruzen Co., Ltd, 31 May 1985, 273